# EUROPEAN PATENT APPLICATION

(11) **EP 4 796 335 A1**
(43) Date of publication of application: **26.08.2026**
(21) Application number: 25159689.6
(22) Date of filing: 24.02.2025
(51) Int. Cl.: B41M 5/26

(54) **MULTILAYER SHEET FOR LASER-MARKING**

(71) Applicant: Senoplast Klepsch & Co. GmbH, 5721 Piesendorf (AT)
(72) Inventor: Klepsch, Günter, 5721 Piesendorf (AT)
(74) Representative: Patentanwaltskanzlei Matschnig & Forsthuber OG

(57) **Abstract**

The invention relates to a multilayer sheet for laser-marking, comprising a first layer and a second layer, wherein the first layer is transparent and comprises a first amorphous thermoplastic, wherein the second layer is laser-markable and adjacent to the first layer, and wherein the second layer comprises a second amorphous thermoplastic and a laser-sensitive coloring agent, and wherein the first amorphous thermoplastic and/or the second amorphous thermoplastic comprises a poly(methyl methacrylate) (PMMA), an acrylonitrile butadiene styrene (ABS), a polystyrene (PS), a styrene acrylonitrile (SAN), an acrylonitrile styrene acrylate (ASA), or a combination thereof. Furthermore, the invention is directed to a method for laser-marking the multilayer sheet, comprising the following steps: a) providing the multilayer sheet, and b) laser-marking a predetermined area of the second layer by directing a laser light onto the second layer through the first layer.

## Description

The present invention relates to a multilayer sheet for laser-marking, to a method for laser-marking the multilayer sheet, and to a laser-marked multilayer sheet and a laser-marked thermoformed object obtainable with the method.

Laser-marking is a non-contact method to create permanent laser-markings on a wide range of materials, including polymers, by using a focused laser beam. Laser-marking offers several advantages to introduce permanent markings in multilayer sheets, including high precision, fast processing speeds, and the ability to create complex designs with minimal thermal impact.

EP 2 487 029 A1 relates to a laser-markable multilayer laminate for an electronic passport using a composite hinge sheet.

EP 3 778 250 A1 discloses a laminate body in which a print layer is provided downstream of a laser color development layer.

In EP 3 075 559 A1, a transparent laser-marking sheet including a base-material sheet and an adhesive layer is described. The base-material sheet can be configured as a multilayer sheet having skin layers and a core layer.

WO 2012/121910 A2 refers to a process to mark a multilayered article having a release layer and an adhesive layer, wherein in the process, a laser to produce markings within more than one layer of the article is used.

In multilayer sheets, it can be desirable to laser-mark not the top layer(s) but rather a layer arranged underneath said top layer(s), such that the overall surface of the multilayer sheet remains flat. However, multilayer sheets often comprise layers with various optical and/or thermal properties, which can result in difficulties upon laser-marking, such as the formation of bulges, corrugations and bumps, in material damage (particularly thermal destruction due to heating upon laser treatment), and/or in a low contrast of the laser-marked area (in case a sufficient amount of laser light cannot pass through the top layer(s), and thus cannot reach the layer arranged underneath which is intended to be laser-marked).

It is an object of the present invention to provide a laser-markable multilayer sheet which outer surface remains flat and defect-free upon laser-marking, and with which a laser-marked area with a good contrast and thus a good visibility can be achieved.

The present invention relates to a multilayer sheet for laser-marking, comprising a first layer and a second layer, wherein the first layer is transparent and comprises a first amorphous thermoplastic, wherein the second layer is laser-markable and adjacent to the first layer, and wherein the second layer comprises a second amorphous thermoplastic and a laser-sensitive coloring agent, and wherein the first amorphous thermoplastic and/or the second amorphous thermoplastic comprises a poly(methyl methacrylate) (PMMA), an acrylonitrile butadiene styrene (ABS), a polystyrene (PS), a styrene acrylonitrile (SAN), an acrylonitrile styrene acrylate (ASA), or a combination thereof.

With the multilayer sheet according to the present invention, high-contrast, durable laser-marked areas (e.g. a symbol, image, decorative element and/or text, such as a logo) can be generated in the second layer. These laser-marked areas are well visible through the first, transparent layer, whilst maintaining, by the first layer, a smooth outer surface of the multilayer sheet. The polymers PMMA, ABS, PS, SAN and ASA were found to be particularly suitable for use in the present invention. First of all, they have a good ability to be laser-marked. Also, these polymers have a good mechanical strength and impact behavior. As is known by the skilled person, the impact behavior can be tailored accordingly by using an impact modifier (e.g. rubber particles), or by adjusting the monomer ratio accordingly. Furthermore, the transparency of said polymers, particularly of PMMA, ASA, SAN and PS, is excellent, making these polymers useful for use in the first layer. Also, the aforementioned polymers have a good processability and are well suitable for thermoforming. This can allow the multilayer sheet to be thermoformed such to obtain a desired geometric shape, either prior to or after the laser-marking. The present invention can thus be applied in various technical fields.

**[Transparency]** Transparency is the physical property of allowing light to pass through a material without appreciable scattering of light. A transparent layer of the multilayer sheet according to the present invention intends to refer to a layer that has (i) a sufficient transparency to recognize, by the human eye, the layer(s) underneath, preferably at a thickness of said transparent layer of 30 µm or above, more preferably of 50 µm or above; and (ii) a sufficient transparency to allow for laser light used upon laser-marking to pass through said layer to laser-mark the second layer arranged underneath. Accordingly, the transparent layer can be colorless or slightly pigmented (e.g. it can comprise less than 1.0 wt% of a coloring agent, preferably less than 0.5 wt%, with respect to the total weight of the polymer(s) comprised in the respective transparent layer). Transparent layers according to the present invention include the first layer, and, if present, a coating layer and/or a protection layer.

**[Multilayer sheet]** The multilayer sheet according to the present invention (also referred to as multilayer composite body) comprises a first layer and a second layer. The first layer of the multilayer sheet is transparent. This allows for the laser light to pass through the first layer such to laser-mark the second layer arranged underneath the first layer, and for the laser-marking to be visible to the human eye. The first layer is configured to provide smoothness to the multilayer sheet after laser-marking by suppressing the formation of bulges, corrugations, bumps, etc on an outer surface of the multilayer sheet (i.e., a surface of the multilayer sheet touchable by human individuals). If the laser-marking results in such an unevenness, it is, at least mainly, preferably completely, arranged in interlayer-regions between the first layer and the second layer, and a, at least mainly, preferably completely, smooth (i.e. flat, planar, non-corrugated) outer surface of the laser-marked multilayer-sheet is ensured.

The multilayer sheet is preferably a polymeric multilayer sheet. That means that, preferably, the main component of each layer of the multilayer sheet is a polymer or a combination of two or more polymers; i.e. the total amount of polymer(s) per layer is preferably above 60 wt%, more preferably above 80 wt%, with respect to the total weight of the respective layer. Preferably, the content of the first amorphous thermoplastic is above 60 wt%, more preferably above 80 wt%, with respect to the total weight of the first layer, and/or the content of the second amorphous thermoplastic is above 60 wt%, more preferably above 80 wt%, with respect to the total weight of the second layer. The multilayer sheet being a polymeric multilayer sheet allows for further processing steps such as thermoforming to obtain a desired shape. A polymer is understood to be a large molecule (i.e. a macromolecule) consisting of repeating structural units (i.e. monomer units) covalently bonded together, typically more than 100 structural units per polymer chain, e.g. 10 000 to 100 000. The term "polymer" comprises homopolymers (consisting of only one structural unit), copolymers (consisting of two different structural units), terpolymers (consisting of three different structural units), etc. As used herein, the term "polymer" also refers to polymers that comprise, apart from polymer chains, an impact modifier, such as rubber particles, in the polymer matrix.

The multilayer sheet is preferably thermoformable. This intends to mean that the multilayer sheet can be shaped, preferably by using a mold when heated. The first layer and the second layer of the multilayer sheet each comprise an amorphous thermoplastic that becomes soft when exposed to a temperature closely below, at or above their glass transition temperature (Tg), allowing them to be thermoformed into a desired shape, particularly by deep drawing. Thermoforming is commonly used for packaging (e.g. packaging of food, consumer goods, or medical goods), automotive parts (e.g. door panels, center consoles, roof boxes, indoor and outdoor parts of mobile homes), furniture parts (e.g. wash basins, bathtubs, shower trays), and in various other industrial applications (e.g. suitcases, covers for printers, construction machines, agricultural machines or vending machines). In the present application, the point of inflection of the endothermic step indicating the glass transition is referred to as the glass transition temperature (Tg). The glass transition refers to the gradual transition of an amorphous or semi-crystalline polymer from its energy-elastic (i.e., glassy) state to its entropy-elastic (i.e., rubbery) state. The Tg is preferably determined from DSC analysis (preferably by using a heating/cooling rate of 20 K/min, a sample weight of from 10 to 15 mg, and determining the Tg from the second heating cycle after eliminating the thermal history of the polymer). The first layer and the second layer are preferably free of a thermosetting resin (i.e. a duromer). This facilitates thermoforming. It is noted that thermoforming is not possible if the multilayer sheet comprises e.g. a fabric layer (particularly a woven fabric), a paper layer, a metal layer (e.g. a metal foil), a ceramic layer and/or a fiber-reinforced polymer.

The multilayer sheet preferably has a surface hardness (Rockwell scale M) of at least 30, more preferably at least 40, yet more preferably at least 60; and/or a surface hardness (Rockwell scale L) of at least 60, yet more preferably at least 75; and/or a surface hardness (Rockwell scale R) of at least 95, more preferably at least 105 (determined via ISO 2039/2 at 23 °C). A higher hardness brings the advantage of increased wear resistance, improved strength, and enhanced dimensional stability. The surface hardness is understood as the hardness measured at a surface of the first layer arranged opposite a surface of the first layer facing the second layer.

Preferably, the first layer is free of a coloring agent, particularly preferably free of a laser-sensitive coloring agent. Since the second layer is laser-markable and the laser light needs to pass through the first layer to allow for a laser-marking of the second layer arranged underneath the first layer, a good transparency of the first layer is hereby ensured. This allows the laser light to easily pass through the first layer without any significant weakening of the laser light, and preferably without any significant impact on the materials, particularly polymer(s), comprised in the first layer (such as a thermal damage caused by heating during laser treatment). Alternatively, the first layer can comprise a low amount of coloring agent, preferably a non-laser-sensitive coloring agent (i.e. a coloring agent that does not react and/or change its color when exposed to laser light), provided that a sufficient amount of laser light can still reach the second layer. The first layer can comprise the coloring agent in an amount of 5 wt% or below, preferably 3 wt% or below, yet more preferably 1 wt% or below, particularly preferably 0.5 wt% or below, with respect to the total weight of the polymer(s) comprised in the first layer.

The second layer of the multilayer sheet is laser-markable. This intends to be understood as the ability of the second layer to be marked (i.e., engraved, modified) by a laser beam without significantly damaging or compromising its structural integrity (particularly its mechanical performance). Depending on the desired structure to be generated upon laser-marking (e.g. a symbol, image and/or text), a predetermined area of the second layer can be laser-marked. The second layer is adjacent to the first layer. This means that no other layer is arranged between the first layer and the second layer. Thus, the laser-marked area of the second layer is visible to the human eye through the transparent first layer.

The thickness of the first layer can range from 10 to 2000 µm. Provided that the first layer has a sufficient transparency, the second layer is well recognizable by the human eye even at a comparatively high thickness of the first layer. Preferably, the first layer has a thickness of from 10 to 200 µm, more preferably 30 to 150 µm, yet more preferably 40 to 130 µm. This yields a good balance between the smoothness of the outer surface of the multilayer sheet and the contrast of the laser-marked area.

The thickness of the second layer can range from 10 to 2 000 µm. Preferably, the second layer has a thickness of from 20 to 700 µm, more preferably 30 to 400 µm. This allows for a good processability of the multilayer sheet, e.g. via thermoforming. However, since the laser-marking is generated in the second layer, the relevance of the thickness of the second layer for the present invention is lower than the relevance of the thickness of the first layer.

The multilayer sheet can have a total thickness of from 300 to 20 000 µm, depending on the intended application. Preferably, the multilayer sheet has a total thickness of from 500 to 4 000 µm, yet more preferably from 600 to 3 000 µm. This provides a good mechanical stability, particularly stiffness.

**[Amorphous thermoplastic]** The first layer and the second layer comprise a first and a second thermoplastic, respectively. A thermoplastic is understood to be a polymer with linear, non-crosslinked polymer chains. An amorphous thermoplastic is to be understood as a polymer consisting essentially of amorphous, non-crystallizable domains in its solid state. A polymer is considered to be amorphous if it does not show a discernible crystallization or melting peak after elimination of its thermal history, which can e.g. be determined by means of DSC analysis. The first and/or second amorphous thermoplastic can comprise a polycarbonate (PC), a poly(methyl methacrylate) (PMMA), an acrylonitrile butadiene styrene (ABS), a polyvinyl chloride (PVC), a polystyrene (PS), an acrylonitrile styrene acrylate (ASA), a styrene acrylonitrile (SAN), a polyetherimide (PEI), a polysulfone (PSU), a polyphenylsulfone (PPSU), a polyethylene terephthalate glycol (PETG; note that PETG can be rendered amorphous by rapid cooling to prevent crystallization), an amorphous polyethylene terephthalate (A-PET), or a combination thereof, or a combination of any of the aforementioned amorphous thermoplastics with one or more other thermoplastics (provided that at least one of the first and/or second amorphous thermoplastic comprises a PMMA, an ABS, a PS, a SAN and/or an ASA). When combining the first or second amorphous thermoplastic with one or more other thermoplastics, these may be amorphous or semi-crystalline, provided that the resulting polymer composition allows for a sufficient transparency of the first layer as required in the present invention to recognize the second layer arranged underneath, and preferably provided that the multilayer sheet remains thermoformable.

Preferably, both the first amorphous thermoplastic and the second amorphous thermoplastic comprise a PMMA, an ABS, a PS, a SAN, an ASA, or a combination thereof, yet more preferably a PMMA, an ABS, a PS, an ASA, or a combination thereof, particularly preferably a PMMA, a PS, an ASA, or a combination thereof. The first amorphous thermoplastic and the second amorphous thermoplastic can comprise or be the same polymer type (e.g. a PMMA) or different polymer types (e.g. the first amorphous thermoplastic can comprise a PMMA and the second amorphous thermoplastic can comprise an ABS). When both the first amorphous thermoplastic and the second amorphous thermoplastic comprise a PMMA, an ABS, a PS, a SAN, an ASA, or a combination thereof, a particularly good result in laser-marking is achieved (i.e. a high contrast of the laser-marking can be achieved along with a smooth surface of the multilayer sheet), together with a good thermoformability of the multilayer sheet. Preferably, the first amorphous thermoplastic comprises a PMMA, a SAN, an ASA and/or a PS, particularly preferably a PMMA and/or a PS, and the second amorphous thermoplastic comprises a PMMA, a SAN, an ASA, an ABS and/or a PS, particularly preferably a PMMA, an ABS and/or a PS. This combination is particularly well suitable for the present invention due to an excellent transparency of the first layer combined with a good laser-markability of the second layer. Alternatively, one of the first and the second amorphous thermoplastic can comprise a PMMA, an ABS, a PS, an ASA, a SAN, or a combination thereof, and the other of the first and second amorphous thermoplastic can comprise a PC, an A-PET or a PETG, or a combination thereof.

**[Poly(methyl methacrylate) (PMMA)]** The PMMA can be a general-purpose PMMA (GP-PMMA), an impact-modified PMMA (HI-PMMA), or a combination (i.e. blend, mixture) thereof. A GP-PMMA (also referred to as standard PMMA, PMMA homopolymer or non-modified PMMA) signifies a PMMA formed by polymerizing methyl methacrylate (MMA) monomer. An HI-PMMA intends to refer both to a PMMA copolymer and a PMMA comprising rubber particles as an impact modifier. The PMMA can be modified to improve specific properties, e.g. impact resistance, flexibility, adhesion, compatibility and/or processability (e.g. thermoformability). The PMMA copolymer can be obtained by copolymerizing methyl methacrylate with one or more other comonomers, e.g. with butyl acrylate, styrene, ethyl acrylate, methacrylic acid, or a combination thereof. The PMMA copolymer can also be obtained by grafting one or more of said comonomers onto PMMA chains as side chains; one or more oligomers and/or polymers (e.g. ABS) can also be grafted onto PMMA chains. The HI-PMMA comprising rubber particles can be formed by incorporating the impact modifier (preferably rubber particles) into the PMMA matrix during the polymerization of methyl methacrylate, or by mixing pre-polymerized or polymerized PMMA with the impact modifier (e.g. via compounding, extrusion). The impact modifier can be covalently bonded to PMMA chains, particularly via grafting, to improve the compatibility between the impact modifier and the PMMA, and thus the homogeneity and stability of the modification.

The HI-PMMA preferably comprises rubber particles, particularly preferably core-shell rubber particles and/or grafted rubber particles. Rubber particles create localized stress dissipation zones, hereby acting as energy absorbers and preventing crack propagation, and thus effectively improve the resistance to sudden impacts. Particularly preferably, the HI-PMMA comprises core-shell rubber particles. In this case, a soft rubber core is surrounded by a rigid shell (e.g. a GP-PMMA) which structure helps to effectively distribute impact forces. The rubber particles preferably have a particle size of from 50 to 500 nm, more preferably 100 to 400 nm. This yields an excellent stress distribution and energy absorption without significantly reducing transparency. Preferably, the rubber particles are grafted onto the PMMA to form the HI-PMMA. As such, the rubber particles are preferably covalently bonded to the PMMA. This ensures a homogeneous distribution of the rubber particles in the PMMA matrix. It is preferred that the rubber particles are crosslinked. As such, they can provide a better elasticity and impact resistance, and the crosslinked network can prevent deformation under stress, ensuring a consistent long-term performance of the HI-PMMA. It is noted that the particle size of rubber particles is herein understood to be the d₅₀ particle size, i.e. the particle size at 50% of a cumulative distribution, which can be determined by laser diffraction according to ISO 8130-13:2019.

The HI-PMMA can comprise polybutadiene, methyl methacrylate-butadiene-styrene, styrene-butadiene, acrylic rubber (e.g. butyl acrylate, ethyl acrylate), polydimethylsiloxane (PDMS), or a combination thereof as rubber component. Preferably, the HI-PMMA comprises methyl methacrylate-butadiene-styrene, polybutadiene, styrene-butadiene, butyl acrylate, or a combination thereof. As such, an excellent transparency can be maintained, along with ensuring a good impact behavior owing to the rubber component. Preferably, the HI-PMMA comprises the rubber component in an amount of from 3 to 23 wt%, particularly preferably 7 to 17 wt%, with respect to the total weight of the HI-PMMA. This yields a good balance between strength and toughness.

The PMMA (including the HI-PMMA) preferably has a light transmittance of at least 90% (determined according to ASTM D1003 at 23 °C, 3 mm thickness). As such, it provides a high transparency and is well suitable for use in the first layer. Preferably, the HI-PMMA has a tensile strength of at least 30 MPa, more preferably at least 40 MPa, particularly preferably at least 45 MPa, and/or an elongation at break of 60% or below, more preferably 40% or below (determined at 23 °C according to ISO 527-2:2012). The HI-PMMA thus can provide a good balance between strength and flexibility. Additionally or alternatively, the HI-PMMA preferably has a Charpy impact strength (notched) of 3.5 kJ/m² or above, preferably of 4.5 kJ/m² or above (determined at 23 °C according to ISO 179-1:2022), and/or a Charpy impact strength (unnotched) of 40 kJ/m² or above, preferably 60 kJ/m² or above (determined at 23 °C according to ISO 179-1:2022). This yields a good impact behavior.

In some preferred embodiments, the first amorphous thermoplastic and/or second amorphous thermoplastic comprises a PMMA, preferably wherein the PMMA comprises a GP-PMMA. Particularly preferably, the first amorphous thermoplastic and/or the second amorphous thermoplastic is a GP-PMMA. Using a GP-PMMA yields an excellent transparency along with a good UV stability, scratch resistance and chemical resistance.

In other preferred embodiments, the first amorphous thermoplastic and/or second amorphous thermoplastic comprises an HI-PMMA. Particularly preferably, the first and/or second amorphous thermoplastic is an HI-PMMA. This imparts a good toughness and cracking resistance to the multilayer sheet, and can also improve processing behavior, particularly during thermoforming. If each of the first and second amorphous thermoplastic comprises an HI-PMMA or even consists of an HI-PMMA, a particularly good laser-marking result can be obtained, including a high contrast of the laser-marked area and a good smoothness of the multilayer sheet.

Preferably, the first amorphous thermoplastic is a GP-PMMA and/or an HI-PMMA. This allows for an excellent transparency such that the second layer arranged underneath the first layer is well visible. Accordingly, a laser-marking generated in the second layer can well be seen. Preferably, the first amorphous thermoplastic and/or the second amorphous thermoplastic is a combination of a GP-PMMA and an HI-PMMA. This provides a good balance of strength and impact resistance. Preferably, the GP-PMMA and the HI-PMMA comprised in the same layer are blended (i.e. mixed) in a ratio of from 20:80 to 90:10 wt% (GP-PMMA:HI-PMMA), more preferably from 40:60 to 60:40 wt%, yet more preferably from 45:55 to 55:45 wt%, particularly preferably 50:50 wt%. Using both of said PMMA types in a similar amount in the same layer, particularly in a ratio of from 45:55 to 55:45 wt%, does not only yield an ideal balance between strength and impact resistance but also allows for an improved processing behavior, particularly during thermoforming.

In some preferred embodiments, the first amorphous thermoplastic is a PMMA, preferably a GP-PMMA and/or an HI-PMMA, particularly preferably an HI-PMMA, and the second amorphous thermoplastic is selected from the group consisting of a PMMA, an ABS, a PS, an ASA, a SAN, a PC, an A-PET, a PETG, or a combination thereof. All of the aforementioned amorphous thermoplastics are well suitable for laser-marking, and since the first layer comprises a PMMA, an excellent transparency is ensured. Laser-marking of such a multilayer sheet can yield a high-contrast laser-marked area along with a smooth sheet surface.

**[Polystyrene (PS)]** The PS can be a general-purpose PS (GP-PS; i.e. a non-modified PS), or it can be an impact-modified PS (HI-PS) to improve specific properties, e.g. chemical resistance, scratch resistance and/or processability (e.g. thermoformability). An HI-PS can be formed by incorporating rubber particles, particularly core-shell rubber particles and/or grafted rubber particles, into the PS matrix. Rubber particles create localized stress dissipation zones, hereby acting as energy absorbers and preventing crack propagation, and thus effectively improve the resistance to sudden impacts. Preferably, the rubber particles are grafted onto the PS. As such, the rubber particles are preferably covalently bonded to the PS to form the HI-PS. This ensures a homogeneous distribution of the rubber particles in the PS matrix. It is preferred that the rubber particles are crosslinked. As such, they can provide a better elasticity and impact resistance, and the crosslinked network can prevent deformation under stress, ensuring a consistent long-term performance of the rubber-modified PS. Particularly preferably, the impact-resistant PS comprises core-shell rubber particles. In this case, a soft rubber core is surrounded by a rigid shell (e.g. a GP-PS) which structure helps to effectively distribute impact forces.

The HI-PS can comprise polybutadiene, methyl methacrylate-butadiene-styrene, styrene-butadiene, acrylic rubber (e.g. butyl acrylate, ethyl acrylate), polydimethylsiloxane (PDMS), or a combination thereof as rubber component. Preferably, the HI-PS comprises polybutadiene. Since polybutadiene is well compatible with HI-PS, this yields a good distribution of the rubber phase in the polymer matrix. Furthermore, a good impact behavior can be obtained. Preferably, the HI-PS comprises the rubber component in an amount of up to 15 wt%, preferably of from 5 to 10 wt%, with respect to the total weight of the HI-PS. This yields a good balance between strength and toughness.

Preferably, the PS has a tensile strength of 20 MPa or above, more preferably 25 MPa or above, and/or an elongation at break of 55% or below, more preferably 45% or below (determined according to ISO 527-2:2012 at 23 °C, 50 mm/min). As such, the PS provides a good balance between strength and flexibility.

The first and/or second amorphous thermoplastic can comprise a PS, preferably a GP-PS and/or an HI-PS. Using a PS can be beneficial in terms of processability, flexibility and electric insulation, making it useful for applications requiring these properties. In some preferred embodiments, the first amorphous thermoplastic comprises an HI-PS and the second amorphous thermoplastic comprises a GP-PS; or the first amorphous thermoplastic comprises a GP-PS and the second amorphous thermoplastic comprises an HI-PS. This allows for a good balance between strength and toughness. In some preferred embodiments, the first amorphous thermoplastic is a GP-PS and/or an HI-PS, and the second amorphous thermoplastic is an HI-PS, a MI-ABS, an HI-ABS, or a combination thereof. With such multilayer sheets, good laser-marking results can be obtained.

In some preferred embodiments, the first and/or second amorphous thermoplastic is a combination of a GP-PS and a HI-PS. This provides a good balance of strength and impact resistance. Preferably, the GP-PS and the HI-PS are blended (i.e. mixed) in a ratio of from 10:90 to 50:50 wt% (GP-PS:HI-PS), more preferably from 20:80 to 40:60 wt%, particularly preferably 30:70 wt%. This ratio gives a good balance between strength, impact resistance and processability.

**[Acrylonitrile butadiene styrene (ABS)]** ABS is a copolymer made from acrylonitrile, butadiene and styrene, with the butadiene providing the impact resistance, and the styrene and acrylonitrile contributing to rigidity and chemical resistance. The ABS can be a medium-impact ABS (MI-ABS) or a high-impact ABS (HI-ABS). The MI-ABS can comprise 15 to 30 wt% acrylonitrile (ACN), 5 to 14 wt% butadiene (BD) and 55 to 75 wt% styrene (S), and the HI-ABS can comprise 15 to 30 wt% ACN, 15 to 30 wt% BD and 40 to 70 wt% S.

The first and/or second amorphous thermoplastic can comprise an ABS, preferably a MI-ABS, an HI-ABS or a combination thereof, particularly preferably a MI-ABS and/or an HI-ABS. Using an ABS can be advantageous in terms of flexibility, thermal resistance and processability. In some preferred embodiments, the second amorphous thermoplastic comprises an ABS, particularly preferably a MI-ABS or an HI-ABS; even more preferably, the second amorphous thermoplastic is an ABS, particularly preferably a MI-ABS or an HI-ABS. ABS was found to be well suitable for laser-marking such that its use in the second layer yields excellent, high-contrast laser-marks. It is noted that as according to the present invention, the first layer is transparent, it is readily understood that a transparent ABS is used in case the first amorphous thermoplastic comprises an ABS, and/or the ABS is blended with a transparent polymer, preferably with a PC and/or a PMMA, particularly preferably with an HI-PMMA, to obtain a transparency of the first layer as required in the present invention. ABS can e.g. be made transparent by copolymerizing acrylonitrile, styrene and butadiene with methyl methacrylate (MMA). The MI-ABS preferably comprises 22 to 25 wt% acrylonitrile, 65 to 58 wt% styrene and 8 to 12 wt% butadiene, with respect to the total weight of the HI-ABS. The HI-ABS preferably comprises 20 to 25 wt% acrylonitrile, 59 to 65 wt% styrene and 14 to 19 wt% butadiene, with respect to the total weight of the HI-ABS. These MI-ABS and HI-ABS types were found to be particularly suitable for use in the present invention. This may be due to their acrylonitrile content being in the range of from 20 to 25 wt% for both of said ABS types.

In particularly preferred embodiments, the first amorphous thermoplastic is a PMMA, particularly preferably an HI-PMMA, and the second amorphous thermoplastic comprises (or, more preferably, is) an ABS, particularly preferably an MI-ABS or an HI-ABS. This yields an excellent transparency owing to the PMMA, and a good laser-markability due to the ABS.

In some preferred embodiments, the second amorphous thermoplastic is a combination of an ABS and a PC, particularly preferably in a ratio of from 30:70 to 50:50 wt% (ABS:PC), more preferably 35:65 to 45:55 wt%. Using a blend of ABS and PC in the same layer yields a good balance between transparency and toughness.

**[Polycarbonate (PC)]** The PC can be an aromatic or an aliphatic PC. For example, the PC can be made from a bisphenol, such as Bisphenol-A polycarbonate (BPA-PC), Bisphenol-S polycarbonate (BPS-PC), Bisphenol-F polycarbonate (BPS-PC). The PC can also be made from an aliphatic diol, e.g. cyclohexane dimethanol polycarbonate (CDM-PC), 1,2-butanediol-based PC, 1,4-butanediol-based PC, 1,6-hexanediol-based PC, 1,10-decanediol. Preferably, the PC is an aliphatic PC. This facilitates processability, particularly thermoformability.

The PC can be a general-purpose PC (GP-PS; i.e. a non-modified PC), but it can also be modified to improve specific properties, e.g. chemical resistance, thermal stability, scratch resistance and/or processability (e.g. thermoformability). For this purpose, the PC can be blended with one or more other polymers, such as an ABS, an A-PET, a polybutylene terephthalate (PBT), or a combination thereof. An impact-modified PC (HI-PC) can be formed by incorporating an impact modifier, particularly rubber particles into the PC matrix during polymerization, or by mixing PC with the impact modifier (e.g. via compounding). The impact modifier can be covalently bonded to PC chains, particularly via grafting, to improve the compatibility between the impact modifier and the PC, and thus the homogeneity and stability of the modification.

Preferably, the PC is an HI-PC. This imparts a good toughness and cracking resistance to the multilayer sheet whilst providing good processing properties. Preferably, the HI-PC is an aliphatic HI-PC. As such, a particularly good processability and toughness can be obtained. Preferably, the HI-PC comprises rubber particles, particularly preferably core-shell rubber particles and/or grafted rubber particles. Rubber particles create localized stress dissipation zones, hereby acting as energy absorbers and preventing crack propagation, and thus effectively improve the resistance to sudden impacts. Preferably, the rubber particles are grafted onto the PC. As such, the rubber particles are preferably covalently bonded to the PC. This ensures a homogeneous distribution of the rubber particles in the PC matrix. It is preferred that the rubber particles are crosslinked. As such, they can provide a better elasticity and impact resistance, and the rubber network can prevent deformation under stress, ensuring a consistent long-term performance of the HI-PC. Particularly preferably, the HI-PC comprises core-shell rubber particles. In this case, a soft rubber core is surrounded by a rigid shell (e.g. a GP-PC) which structure helps to effectively distribute impact forces.

The HI-PC can comprise a polybutadiene, a methyl methacrylate-butadiene-styrene, a styrene-butadiene, an acrylic rubber (e.g. butyl acrylate, ethyl acrylate), a polydimethylsiloxane (PDMS), or a combination thereof as rubber component. Preferably, the HI-PC comprises a methyl methacrylate-butadiene-styrene. This allows for a good impact behavior whilst maintaining an excellent transparency. Preferably, the HI-PC comprises the rubber component in an amount of from 5 to 30 wt%, particularly preferably 10 to 15 wt%, with respect to the total weight of the HI-PC. This yields a good balance between strength and toughness.

The first and/or second amorphous thermoplastic can comprise or even consist of a PC, particularly an HI-PC. PC yields an excellent transparency, making it highly suitable for use especially in the first layer. In some preferred embodiments, the first and/or second amorphous thermoplastic is a combination of a GP-PC and an HI-PC. This provides a good balance of strength and impact resistance. Preferably, the GP-PC and the HI-PC are blended in a ratio of from 20:80 to 90:10 wt% (GP-PC:HI-PC), more preferably from 40:60 to 60:40 wt%, yet more preferably from 45:55 to 55:45 wt%, particularly preferably 50:50 wt%. Using both of said PC types in a similar amount, particularly in a ratio of from 45:55 to 55:45 wt%, does not only yield an ideal balance between strength and impact resistance but also allows for an improved processing behavior, particularly during thermoforming.

**[Acrylonitrile styrene acrylate (ASA)]** ASA is a terpolymer comprising acrylonitrile, styrene and acrylate. Preferably, the ASA comprises 15 to 35 wt% acrylonitrile (ACN), 40 to 75 wt% styrene (S) and 5 to 20 wt% acrylate, yet more preferably 15 to 25 wt% ACN, 50 to 75 wt% S and 1 to 5 wt% acrylate. A comparatively high styrene content and a comparatively low acrylate content yield a particularly good transparency, making such ASA types suitable for use in the first layer.

In some preferred embodiments, the first amorphous thermoplastic comprises an ASA, and the second amorphous thermoplastic comprises a PMMA, an ABS, a PS, a PC, a PETG, an A-PET, an ASA, a SAN, or a combination thereof, preferably a PMMA, an ABS, a PS, an ASA, or a combination thereof. Such multilayer sheets are well laser-markable, with the laser-marking being well visible through the transparent first layer. The first amorphous thermoplastic preferably comprises an ASA and a SAN, or an ASA and a PMMA. This improves optical properties, resulting in a good transparency, while providing a high UV resistance.

**[Styrene acrylonitrile (SAN)]** SAN is a copolymer comprising styrene and acrylonitrile units. Preferably, the SAN comprises 60 to 80 wt% styrene (S) and 20 to 40 wt% acrylonitrile (ACN), more preferably 75 to 80 wt% S and 20 to 25 wt% ACN. A higher styrene content yields a particularly good transparency, such that SAN types with a higher styrene content are suitable for use in the first layer.

In some preferred embodiments, the first amorphous thermoplastic comprises a SAN, preferably consists of a SAN, and the second amorphous thermoplastic comprises a PMMA, an ABS, a PS, a PC, a PETG, an A-PET, an ASA, a SAN, or a combination thereof, preferably a PMMA, an ABS, a PS, an ASA, a SAN, or a combination thereof. Such multilayer sheets are well laser-markable, with the laser-marking being well visible through the transparent first layer.

**[Coloring agent]** The second layer comprises a laser-sensitive coloring agent. A coloring agent is understood to be a chemical substance that appears in a certain color because it selectively absorbs wavelengths of light. It is noted that white, black and grey are considered as colors herein. The laser-sensitive coloring agent can be selected from an organic or an inorganic coloring agent, or from a combination thereof. Inorganic coloring agents are preferably used due to their excellent color retention. This makes them suitable for long-lasting products. The second layer can comprise a combination of two or more coloring agents, wherein at least one of the coloring agents is laser-sensitive. The optical properties can hereby be tailored accordingly. The coloring agent being laser-sensitive intends to mean that the coloring agent is capable of changing its color upon laser treatment (i.e. upon illumination with laser light) such to generate the laser-marking in a color clearly differing from the non-laser-marked area.

The laser-sensitive coloring agent can comprise a metal oxide, a metal, a monoazo pigment, a Leuco dye, an infrared (IR) absorber, a rare earth component, a phosphor-based component, or a combination thereof. The metal oxide can comprise titanium dioxide (TiO₂), an iron oxide (Fe₂O₃ which is also referred to as red iron oxide, Fe₃O₄), zinc oxide (ZnO), bismuth oxide (Bi₂O₃), antimony-doped tin oxide (Sb-SnO₂), antimony trioxide (Sb₂O₃), antimony chromium titanium dioxide (Sb-Cr(III)-TiO₂), a molybdenum oxide (MoO₃, MoO₂), tungsten oxide (WO₃), cerium oxide (CeO₂), chromium trioxide (Cr₂O₃), or a combination thereof. The metal can be selected from aluminum, copper, zinc, or a combination thereof. The metal can be oxidized and/or coated. This improves the absorptivity and thus the laser-sensitivity. The monoazo pigment is understood to be a coloring agent that comprises an azo group. The monoazo pigment can comprise a naphthol-based monoazo pigment, an arylide yellow (also referred to as Hansa yellow), a toluidine red pigment, a beta-oxynaphthoic acid pigment, or a combination thereof. The IR absorber can comprise a carbon black, bismuth oxychloride, molybdenum sulfide, montmorillonite, or a combination thereof.

The laser-sensitive coloring agent preferably comprises titanium dioxide (TiO₂). Titanium dioxide has a high refractive index which can enhance the laser-marking contrast. Preferably, the titanium dioxide is a rutile titanium dioxide. The rutile form is preferred over the anatase form of titanium dioxide because of its higher refractive index, its higher density, its better stability and its higher degree of absorption of laser light. The titanium dioxide can be coated, e.g. with mica. This can produce a pearlescent or iridescent effect. Preferably, a part of the titanium dioxide is doped. This allows the color to be modified accordingly. Preferably, a part of the titanium dioxide is doped with antimony (Sb) and/or trivalent chromium (Cr³⁺), particularly preferably with antimony. A part of the titanium dioxide is preferably antimony chromium titanium dioxide (Sb-Cr(III)-TiO₂). The absorption of laser light can be enhanced hereby, providing an excellent contrast of the laser-marked area. Preferably, 1 to 8 wt% of the titanium dioxide is doped (preferably with antimony, particularly preferably with antimony chromium titanium dioxide), particularly preferably 3 to 5 wt%, with respect to the total amount of titanium dioxide present in the respective layer. This can considerably improve light absorption and enhance photocatalytic activity whilst maintaining the structural integrity of titanium dioxide. Doping of titanium dioxide is understood to refer to the incorporation of ions (e.g. antimony ions) into the titanium dioxide lattice to modify its properties, particularly to alter its band gap to improve the absorption of light.

The second layer can comprise the laser-sensitive coloring agent (or a combination of two or more laser-sensitive coloring agents) in a total amount of up to 20 wt%, preferably up to 16 wt%, more preferably up to 10 wt%, with respect to the total weight of polymer(s) comprised in the second layer. Since the laser-marked area is generated in the second layer, the laser light does not need to pass through the second layer, such that the second layer does not need to be transparent. Preferably, the second layer comprises the laser-sensitive coloring agent (or a combination of two or more laser-sensitive coloring agents) in a total amount of from 0.1 to 16 wt%, more preferably from 1 to 8 wt%, yet more preferably from 2 to 5 wt%, with respect to the total weight of polymer(s) comprised in the second layer. This amount is not only sufficient to provide the multilayer sheet with a desired color but also yields a good laser-marking contrast.

Preferably, the second layer comprises two or more laser-sensitive coloring agents, wherein a first laser-sensitive coloring agent is titanium dioxide and a second laser-sensitive coloring agent is selected from the group consisting of a metal (preferably aluminum), a metal oxide (preferably Fe₂O₃), or a combination thereof. This provides for an enhanced contrast of the laser-marked area. Preferably, the titanium dioxide and the second laser-sensitive coloring agent are used in the second layer in a ratio of from 90:10 to 40:60 wt% (TiO₂ : second laser-sensitive coloring agent), more preferably from 80:20 to 60:40 wt%. This can considerably contribute to enhancing the contrast of the laser-marked area whilst keeping a smooth outer surface of the multilayer sheet.

The second layer can comprise a color masterbatch, wherein the color masterbatch comprises the laser-sensitive coloring agent (or a combination of two or more laser-sensitive coloring agents), preferably titanium dioxide, preferably wherein a part of the titanium dioxide is doped with antimony (particularly preferably with antimony chromium titanium dioxide), preferably wherein the doped titanium dioxide is in the range of from 1 to 8 wt% with respect to the total amount of titanium dioxide comprised in the color masterbatch. A color masterbatch is understood to be a pre-mixed combination of two or more components, with at least one component being a laser-sensitive coloring agent, that can be uniformly distributed in a polymer. The color masterbatch can comprise titanium dioxide, pigment black (e.g. carbon black, furnace black, iron oxide black, copper chromite black, graphite, aniline black), a paraffin oil, aluminum, chromium trioxide, a quinophthalone (e.g. quinophthalone yellow), barium sulfate (BaSO₄), an iron oxide (e.g. Fe₂O₃), a monoazo pigment, calcium carbonate (CaCO₃), a copper phthalocyanine (e.g. chlorinated copper phthalocyanine and/or α-copper phthalocyanine), perylene red, glitter (particularly white glitter, such as mica), quinone phthalone yellow, a polymer (e.g. a PMMA and/or an ABS), or a combination thereof.

It is preferred that the color masterbatch comprises titanium dioxide (of which preferably a part is doped) and one or more further components selected from barium sulfate, chlorinated copper phthalocyanine, α-copper phthalocyanine, and paraffin oil. This yields a good and long-lasting contrast of the laser-marked area. The use of titanium dioxide results in a good contrast, use of barium sulfate and copper phthalocyanine (especially a combination thereof) provides an enhanced durability, and the use of the paraffin oil provides an improved processability (reduced agglomeration, better compatibility with the polymer matrix, improved flow properties due to reduced viscosity). Preferably, the color masterbatch comprises titanium dioxide in an amount of up to 20 wt%, preferably of from 1 to 12 wt%, more preferably from 2 to 5 wt%, with respect to the total weight of the polymer(s) comprised in the second layer. This provides for a good balance of desired properties, particularly contrast of laser-marking, processability and homogeneous distribution of the color masterbatch in the second layer. Preferably, the color masterbatch comprises titanium dioxide in an amount of at least 5 wt%, more preferably at least 20 wt%, yet more preferably at least 50 wt%, particularly preferably of from 55 to 65 wt%, with respect to the total weight of the color masterbatch. A good contrast of the laser-marked area is hereby ensured, provided that the amount of color masterbatch in the second layer is tailored accordingly.

Preferably, the second layer comprises the color masterbatch in an amount of from 1 to 20 wt%, more preferably 3 to 15 wt%, yet more preferably 5 to 10 wt%, with respect to the total weight of polymer(s) comprised in the second layer. In this way, a homogeneously colored second layer can be obtained, which comprises a sufficient amount of laser-sensitive coloring agent such to obtain a high-contrast laser-marking, and wherein the amount of color masterbatch is still low enough to prevent any negative side effects, such as a deterioration of mechanical properties provided by the polymer(s) comprised in the second layer.

**[Further components]** The first layer and/or the second layer (and/or, if present, any further layers, e.g. a protection layer, a coating layer) can each comprise one or more further components, such as a process aid (e.g. a degassing agent, a flow agent, a fluidizing agent, an anti-caking agent, a lubricant, an anti-cratering and levelling additive, or a combination thereof), a filler, a wax, a matting agent, a flame retardant, a UV stabilizer, a heat stabilizer, or a combination thereof.

Preferably, at least one of the layers of the multilayer sheet comprises a UV stabilizer, yet more preferably at least the first layer, particularly preferably, each layer comprises a UV stabilizer (or a combination of two or more UV stabilizers). This improves the resistance of the multilayer sheet to aging and degradation and provides enhanced weatherability and durability. The stabilizer can be selected from the group consisting of a UV absorber, an antioxidant, an antiozonant, a hindered amine light stabilizer (HALS), or a combination thereof. Preferably, at least one layer, particularly preferably, the first layer and/or the second layer, comprises a HALS and a UV absorber, preferably a triazine-based UV absorber. These UV stabilizers show a good processing performance, and their combination provides a good resistance to aging. Preferably, at least one of the first layer and the second layer comprises a UV stabilizer (or a combination of two or more UV stabilizers) in a total amount of from 0.1 to 5.0 wt%, more preferably from 0.4 to 3.0 wt%, yet more preferably from 0.5 to 1.0 wt%, with respect to the total weight of the polymer(s) comprised in the respective layer. Preferably, at least one of the first layer and the second layer comprises a UV absorber in an amount of from 0.1 to 0.4 wt% and a HALS in an amount of from 0.2 to 0.8 wt%, e.g. 0.3 wt% UV absorber and 0.3 wt% HALS, or 0.1 wt% UV absorber and 0.8 wt% HALS, or 0.2 wt% UV absorber and 0.2 wt% HALS (with respect to the total weight of the polymer(s) comprised in the respective layer). This provides for a particularly good protection to UV light. The UV absorber can be selected e.g. from 2-hydroxyphenyl-s-triazine, 2,4,6-trichloro-1,3,5-triazine, 2,4-bis(2,4-di-tert-butylphenyl)-1,3,5-triazine, 2,4-bis(4-hexylphenyl)-1,3,5-triazine, 2,4-bis(2,4-di-tert-butylphenyl)-1,3,5-triazine-6-carboxylic acid, bis(2,2,6,6-tetramethyl-4-piperidyl) sebacate, 2-(2H-benzotriazol-2-yl)-p-cresol, a 2-hydroxyphenyl-s-triazine derivative, 2-(4,6-diephenyl-1,3,5-traizin-2-yl)-5-hexyloxy-phenol, or a combination thereof. The HALS can be selected e.g. from 1,3,5-triazine-2,4,6-triamine, N,N‴-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6), 2,2,6,6-tetramethyl-4-piperidinol, 2,2,6,6-tetramethyl-4-piperidinyl stearate, 2,2,6,6-tetramethyl-4-piperidinyl 2-ethylhexanoate, or a combination thereof.

**[Coating layer]** The multilayer sheet can further comprise a transparent duromer coating layer adjacent to the first layer, wherein the first layer is arranged between the coating layer and the second layer. That the coating layer is adjacent to the first layer is understood to mean that no other layer is arranged between the first layer and the coating layer. If the multilayer sheet comprises a protection layer, the coating layer is arranged between the first layer and the protection layer. With the coating layer, certain properties of the multilayer sheet can be tailored, such as mechanical, chemical and/or aesthetic properties. The coating layer is a duromer coating layer, meaning that it comprises a thermoset. This does not only allow for a good resistance to chemicals, UV light, heat and corrosion and for an improved durability, but also provides an enhanced thermal stability, hereby assisting in maintaining a smooth appearance of the multilayer sheet upon laser treatment. Preferably, the coating layer has a thickness of from 5 to 20 µm, particularly preferably 8 to 12 µm, e.g. about 10 µm. This yields a good balance between improvement of the aforementioned properties and maintenance of flexibility of the multilayer sheet. A thermoset (also referred to as duromer or resin) is understood as a rigid, three-dimensional polymer with a high glass transition temperature (Tg), e.g. of 140 °C or above, more preferably 180 °C or above, particularly preferably 200 °C or above. Depending on the exact composition, crosslink density and thickness on the coating layer, the coating layer can be thermoformable.

The coating layer can comprise an epoxy resin, an acrylic resin, a polyester resin, a melamine-formaldehyde resin, a urea-formaldehyde resin, or a combination thereof, preferably an acrylic resin. An acrylic resin does not only provide a good outdoor stability but also a high transparency, making it suitable for use in the present invention, since the second layer (which is intended to be laser-marked) arranged underneath the coating layer (and the first layer) remains visible to the human eye. An acrylic resin is understood to refer to a thermoset derived from acrylic acid, methacrylic acid and/or acrylate monomers (e.g. butyl acrylate, methyl methacrylate). The acrylic resin may also be a copolymer comprising acrylate monomers and non-acrylate monomers, such as styrene (e.g. a styrene-acrylate copolymer). When used as a coating layer, the acrylic resin can also be referred to as acrylic lacquer or polyacrylic lacquer. The acrylic resin is preferably a urethane acrylate resin. A coating layer comprising a urethane acrylate resin yields an improved flexibility, toughness, thermal stability and chemical resistance, and may allow for an enhanced adhesion to the first layer. Preferably, the coating layer comprises a UV stabilizer, particularly a UV absorber and/or a HALS, in a total amount of from 0.1 to 5.0 wt%, with respect to the total weight of the coating layer, such to enhance the UV stability of the coating layer and thus the layers arranged underneath.

**[Protection layer]** The multilayer sheet can further comprise a removable, transparent, thermoplastic protection layer, wherein the first layer is arranged between the protection layer and the second layer. If the multilayer sheet comprises a coating layer, the coating layer is arranged between the protection layer and the first layer. The protection layer (also referred to e.g. as protection film, protective layer, protective film) can be applied to prevent damage of the multilayer sheet during storage, transportation and/or processing, and protect it from scratches, dust, dirt and/or chemical exposure. The protection layer is well thermoformable, allowing it to remain onto the multilayer sheet for protection even when the multilayer sheet undergoes a processing step that comprises thermoforming, which brings an enormous advantage. The protection layer is adhered to the first layer (or the coating layer, if present) and is removable (e.g. by peeling it off). The protection layer can comprise an adhesive to improve the adhesion to the first layer (or the coating layer, if present). The adhesive is preferably an acrylate adhesive or an adhesive comprising a natural rubber, particularly preferably an acrylate adhesive. Acrylate adhesives provide a strong adhesion to polymers whilst ensuring a sufficient transparency of the protection layer.

Due to its transparency, the laser light is not, or at least not significantly, affected by the protection layer when laser-marking the second layer. This brings the great benefit that the protection layer can remain onto the multilayer sheet for protection even during laser-marking. Preferably, the protection layer has a thickness ranging from 30 to 80 µm, more preferably 40 to 60 µm. As such, the protection layer can fulfil its intended purpose whilst hindering the laser-marking as little as possible, making it highly suitable for use in the present invention.

The protection layer preferably comprises a semi-crystalline polymer. A semi-crystalline polymer is to be understood as a thermoplastic polymer comprising both amorphous and crystalline domains in its solid state. A polymer is considered to be semi-crystalline if it shows at least one crystallization peak or melting peak after elimination of the thermal history, which can for example be determined by means of DSC analysis. Preferably, the melting temperature (Tm) of the semi-crystalline polymer ranges from 75 to 180 °C, more preferably from 90 to 140 °C. This allows for the protection layer to be thermoformable, such that it can remain onto the multilayer sheet for protection upon further processing, particularly thermoforming (e.g. deep drawing). Preferably, the protection layer comprises a polyolefin, namely a polyethylene (PE), a polypropylene (PP), a polyurethane (PUR), or a combination thereof. The PE can e.g. be a low-density PE (LDPE) or a high-density PE (HDPE). It is preferred that the protection layer comprises a PE. This thermoplastic polymer is not only flexible and easy to peel off, but also provides for a good transparency and was found to be thermoformable, which properties make it suitable for use in the present invention. The melting temperature (Tm) is generally intended to refer to the temperature of a chemical substance at which it changes its state from solid to liquid. As polymers have a melting range rather than a melting point, the melting temperature of a semi-crystalline polymer is signified to be the peak temperature of the endothermic melting peak of the crystalline domains of said polymer, which is preferably determined from DSC analysis (preferably by using a heating/cooling rate of 20 K/min, a sample weight of from 10 to 15 mg, and determining the Tm from the second heating cycle after eliminating the thermal history of the polymer).

**[Further** aspects **of the multilayer sheet]** In some embodiments, the first layer consists of one single transparent layer. In other embodiments, the first layer consists of two or more transparent sub-layers, wherein each sub-layer comprises an amorphous thermoplastic (or a combination of two or more amorphous thermoplastics), wherein the amorphous thermoplastic comprised in at least one of the sub-layers comprises a PMMA, an ABS, a PS, a SAN, an ASA, or a combination thereof. Particularly preferably, the amorphous thermoplastic comprised in each sub-layer comprises a PMMA, an ABS, a PS, a SAN, an ASA, or a combination thereof. Alternatively, a first sub-layer can comprise a PMMA, an ABS, a PS, a SAN, an ASA, or a combination thereof, and a second sub-layer can comprise a different amorphous thermoplastic, such as a PETG, an A-PET and/or a PC. By using two or more sub-layers, the properties of the multilayer sheet can be tailored according to the intended application, particularly with respect to physical properties, thermal properties, resistance to chemicals and/or resistance to weathering.

In some preferred embodiments, the first layer consists of two or three sub-layers, wherein at least a first sub-layer comprises a GP-PMMA and at least a second sub-layer comprises an HI-PMMA. This allows the optical and mechanical properties to be tailored to the intended application, particularly with regard to transparency, toughness and strength. In these preferred embodiments, the second layer preferably comprises an ABS, particularly preferably a MI-ABS. This provides for an excellent laser-markability of the second layer, which can be well seen through the first layer owing to its high transparency.

The multilayer sheet can comprise one or more further layers arranged adjacent to the second layer, on a side of the second layer opposite the first layer. For example, the multilayer sheet can comprise a third layer adjacent to the second layer (i.e. the second layer is then arranged between the first layer and the third layer). The one or more further layers do not need to be transparent because the laser light does not need to pass through them. The one or more layers can each comprise a polymer (e.g. a fiber-reinforced polymer, a thermoplastic polymer), a metal foil, a paper, fibers, a fabric (e.g. a woven or non-woven fabric) or a combination thereof, depending on the intended application. If any of the layers comprises a polymer, said layer can also comprise a coloring agent, which coloring agent can be part of a color masterbatch comprised in said layer. This coloring agent can be the same coloring agent as the coloring agent comprised in the second layer, and/or one or more different coloring agents can be used. Also, the amounts of coloring agent used in the one or more further layers can differ from one another. Said one or more further layers can also be transparent. This allows that a laser-marked area of the second layer is visible to the human eye also through these further layer(s). The presence of one or more further layers can be advantageous to tailor certain properties of the multilayer sheet, such as physical properties, thermal properties, resistance to chemicals and/or resistance to weathering, depending on the intended application. Preferably, the one or more further layers each comprise an amorphous thermoplastic. As such, a good processability, particularly thermoformability, of the multilayer sheet can be maintained. The one or more further layers can each have a thickness of from 10 to 20 000 µm, depending on the intended application, e.g. 50 µm, 300 µm, 1 000 µm or 3 000 µm.

Each of the polymers comprised in the multilayer sheet, particularly the polymer(s) comprised in the first layer, in the second layer, and, if present, the protection layer and/or the coating layer, preferably has a purity of at least 95 wt%, more preferably at least 99 wt%, with respect to the weight of the respective polymer. The purity of a polymer refers to the degree to which this polymer is free from contaminants, residual monomers and other undesired substances.

The multilayer sheet can be manufactured by simultaneously processing two or more polymers (or polymer blends), each in a separate co-extruder, to extrude distinct layers. Said layers can then be combined with a co-extrusion tool to form a continuous multilayer sheet, which can subsequently be cooled and cut into a desired length to obtain the multilayer sheet. If the multilayer sheet comprises a coating layer, said coating layer can be produced by applying a lacquer onto the outer surface of the multilayer sheet (i.e., onto the first layer). The lacquer can comprise a binder (e.g. an oligomer), a reactive diluent (e.g. a monomer), a photoinitiator, and/or additives (e.g. defoamer, levelling agent, UV stabilizer, etc.). The applied lacquer can then be illuminated, e.g. with UV light, to initiate a photopolymerization such to obtain the crosslinked coating layer. The coating layer can be applied before or after cutting the continuous multilayer sheet. Also, a protection layer can be applied onto the multilayer sheet, either before or after cutting, and, if a coating layer is applied, after applying the coating layer.

**[Method]** The present invention further relates to a method for laser-marking the multilayer sheet according to the present invention, comprising the following steps:
a) providing the multilayer sheet, and
b) laser-marking a predetermined area of the second layer by directing a laser light onto the second layer through the first layer.

To direct the laser light (i.e. the laser beam) onto the second layer, a laser can be arranged at a predetermined distance to the multilayer sheet such that the laser light can impinge on the outer surface of the multilayer sheet. The predetermined distance of the laser to the multilayer sheet intends to refer to the distance between the beam exit of the laser to the outer surface of the multilayer sheet facing the laser head. The outer surface of the multilayer sheet intends to refer to a surface touchable by human beings; i.e. to a side of the first layer arranged opposite to a side of the first layer facing the second layer; or, if the multilayer sheet comprises a protection layer, to a side of the protection layer arranged opposite to a side of the protection layer facing the first layer; or, if the multilayer sheet comprises a coating layer (and no protection layer), to a side of the coating layer arranged opposite to a side of the coating layer facing the first layer. As the first layer is transparent, the laser light, or at least a sufficient amount thereof, can pass through the first layer such to impinge on the second layer and laser-mark the predetermined area of the second layer. Laser-marking of the predetermined area can be performed by moving the laser in relation to the multilayer sheet accordingly, and/or by moving the multilayer sheet in relation to the laser. It can be sufficient to laser-mark the multilayer sheet with only one laser pass. That means that a single traversal of the laser beam over the multilayer sheet can be sufficient to create the desired laser-mark.

Upon laser-marking in step b), the color of the laser-sensitive coloring agent comprised in the second layer is altered. This can occur in that the laser light triggers a chemical reaction of the laser-sensitive coloring agent which results in a color change, and/or by carbonization, i.e. by an at least partial thermal degradation of the laser-sensitive coloring agent caused by heat generated upon absorption of laser light, resulting in localized carbon enrichment and thus a darker color than the surrounding, untreated area of the second layer. Additionally, other components comprised in the second layer can undergo a color change upon laser-marking, e.g. polymer(s) and/or UV stabilizer(s), e.g. due to heat generated in the second layer during step b) caused by absorption of laser light. In practice, the effects of color change due to a chemical reaction and color change due to carbonization may occur simultaneously and can be difficult to separate from each other. The laser-marking can also cause an expansion (i.e. foaming) of parts of the laser-marked area. However, since the second layer is covered by the first layer, a bulging is suppressed, or at least reduced, such the surface of the multilayer sheet can remain flat.

**[Laser type]** The selection of a suitable laser type can depend inter alia on the type of laser-sensitive coloring agent, and/or on the polymer(s) and/or other components (e.g. UV stabilizer) comprised in the first layer and the second layer (and, if present, the coating layer and/or the protection layer). The laser can be a UV laser, an Nd:YAG laser (neodymium-doped yttrium aluminum garnet laser), a Nd:YVO₄ laser (neodymium-doped yttrium orthovanadate laser), a fiber laser, a green laser, a diode laser or a CO₂ laser (carbon dioxide laser). The UV laser preferably emits light at about 355 nm. The Nd:YAG laser and the Nd:YVO₄ laser preferably emit light at about 1064 nm. The fiber laser is preferably an optical fiber doped with a rare earth element, particularly ytterbium (Yb), erbium (Er), or thulium (Tm). The fiber laser preferably emits light at about 1064 nm (Yb fiber laser), about 1550 nm (Er fiber laser), or about 2000 nm (Tm fiber laser). The green laser preferably emits light at 532 nm. The diode laser can emit light in the UV, visible, near-IR, mid-IR and far-IR spectrum, e.g. at about 808, 940 and/or 980 nm. The CO₂ laser preferably emits light at about 9.6 and 10.6 µm. Preferably, a CO₂ laser, a UV laser, a green laser or a fiber laser is used, particularly preferably a UV laser, a green laser or a fiber laser. Using any of these laser types results in a high-contrast, precise laser-marking. Preferably, a fiber laser is applied,

particularly preferably a fiber laser emitting light at about 1064 nm. A precise, high-contrast visible laser-marking can then be achieved, particularly if the laser-sensitive coloring agent is or comprises titanium dioxide.

**[Operating parameters]** Preferably, in step b), the laser is arranged in a predetermined distance to the multilayer sheet of from 10 to 200 mm, more preferably 140 to 180 mm, particularly preferably 150 to 170 mm. As such, a good contrast of the laser-marked area can be achieved whilst avoiding a significant thermal degradation of components comprised in the multilayer sheet.

It is preferred that in step b), the laser is operated at a pulse frequency of from 5 to 100 kHz, preferably 10 to 80 kHz, yet more preferably 10 to 50 kHz, particularly preferably 15 to 25 kHz. When using a pulse frequency of 15 to 25 kHz, particularly about 20 kHz, a good laser-marking can be achieved.

A laser power applied in step b) preferably ranges from 1 to 30 W, more preferably from 2 to 15 W, yet more preferably from 3 to 10 W, particularly preferably from 4 to 8 W. It was found that when using a laser power of from 4 to 8 W, a good balance between contrast of laser-marking and smoothness of the laser-marked multilayer sheet can be obtained.

The laser-marking can be performed using a laser speed (i.e. marking speed) of from 10 to 4000 mm/s. Preferably, the laser-marking is performed using a laser speed of from 50 to 2000 mm/s, more preferably from 100 to 500 mm/s, particularly preferably from 100 to 200 mm/s. A high-contrast laser-marking can then be obtained within a reasonable period of time. The exact laser speed to be used depends inter alia on the applied pulse frequency and laser power. For example, when using a laser power of from 3 to 20 W, it is preferred to set the laser speed in a range of from 100 to 400 mm/s, preferably at a pulse frequency of 15 to 25 kHz (particularly preferably around 20 kHz). Preferably, a laser power of from 5 to 20 W is used, particularly from 7 to 15 W, along with a laser speed in a range of from 100 to 200 mm/s, preferably at a pulse frequency of 15 to 25 kHz (particularly preferably around 20 kHz).

The linear energy density (i.e. the energy input per unit length), which is the ratio of laser power to scanning speed, can range from 0.0001 to 3.0000 J/mm, preferably from 0.001 to 1.000 J/mm. It is preferred that the linear energy density ranges from 0.005 to 0.5 J/mm, yet more preferably from 0.01 to 0.3 J/mm, particularly preferably from 0.025 to 0.150 J/mm. It was found that with such a linear energy density, excellent laser-marking results are achievable with regard to smoothness of the multilayer sheet and contrast of the laser-marked area generated in the second layer, particularly with a linear energy density of from 0.015 to 0.135 J/mm.

**[Further** aspects **of the method]** Preferably, the method comprises a further step c) of thermoforming the multilayer sheet, wherein step c) is performed after step b) or between steps a) and b). The multilayer sheet is hereby heated until it becomes soft and is then shaped into a desired form using a mold. Preferably, the multilayer sheet is thermoformed by deep drawing. Deep drawing is understood to refer to a forming process in which the heated (and thus softened) multilayer sheet is stretched into a deep, three-dimensional shape, e.g. by using a die and a punch. According to the present invention, the laser-marking can be performed prior to or after the thermoforming step. Performing the laser-marking prior to thermoforming can be useful if the multilayer sheet is intended to be delivered as semi-finished good to an end processor, such to laser-mark the multilayer sheet e.g. with a logo prior to their delivery. This sequence of method steps can also be useful if the dimensions of the laser-mark to be generated are matched to the degree of expansion occurring upon thermoforming, such that the desired dimensions of the laser-mark are only obtained after thermoforming. The alternative sequence, i.e. performing the laser-marking after the thermoforming step, can be useful to laser-mark a desired area of the thermoformed object, without having to take into account the degree of expansion upon thermoforming.

When the multilayer sheet comprises the removable, transparent protection layer, the protection layer is preferably removed after step b) (i.e. after the laser-marking), or, when the method comprises a thermoforming step (step c)), the protection layer is preferably removed after the later of steps b) and c). As the protection layer according to the present invention is transparent to the laser light, it can remain onto the multilayer sheet during the laser-marking step. If the protection layer is thermoformable, and the method comprises the step of thermoforming the multilayer sheet, the protection layer can remain onto the multilayer sheet also during thermoforming. The present invention thus allows for an enhanced and prolonged protection of the multilayer sheet throughout the steps of the method. The thermoformed multilayer sheet can even be delivered to a final customer (e.g. a private individual) whilst still comprising the protection layer, and the final customer can then remove the protection layer just before use.

The present invention also relates to a laser-marked multilayer sheet obtainable with the inventive method. The multilayer sheet can comprise e.g. a laser-marked symbol, image and/or text (e.g. a logo), such to provide an indication of origin, instructions for use, information about the composition of the multilayer sheet (e.g. about the polymers comprised therein), and/or decorative elements (e.g. wood decor, carbon design, fabric design, linen design). Performing the laser-marking prior to further processing steps, particularly thermoforming, can be useful if the multilayer sheet is intended to be delivered as semi-finished good to an end processor, such to laser-mark the multilayer sheet e.g. with a logo prior to their delivery. This sequence can also be useful if the dimensions of the laser-mark to be generated are matched to the degree of expansion occurring upon thermoforming, such that the desired dimensions of the laser-mark are only obtained after thermoforming.

The present invention is also directed to a laser-marked thermoformed object obtainable with the inventive method (wherein the method comprises also step c) of thermoforming the multilayer sheet). The thermoformed object can comprise e.g. a laser-marked symbol, image and/or text (e.g. a logo), such to provide an indication of origin, instructions for use, information about the composition of the multilayer sheet (e.g. about the polymers comprised therein), and/or decorative elements (e.g. wood decor, carbon design, fabric design, linen design). The thermoformed object can e.g. be a door panel, a center console, a roof box, a suitcase lid, a cover for a printer, an indoor or outdoor part of a mobile home, a furniture part (e.g. a wash basin, a bathtub, a shower tray), etc.

The present disclosure also relates to a laser-markable thermoformed object comprising the inventive multilayer sheet. The laser-markable thermoformed object is obtainable by performing steps a) and c) of the inventive method, i.e. providing the multilayer sheet, and thermoforming the multilayer sheet to obtain the thermoformed object, which can then be laser-marked according to step b) of the inventive method. The thermoformed object can e.g. be a door panel, a center console, a roof box, a suitcase lid, a cover for a printer, an indoor or outdoor part of a mobile home, a furniture part (e.g. a wash basin, a bathtub, a shower tray), etc. The laser-marking can be performed after thermoforming, which allows a desired area of the thermoformed object to be marked, without having to take into account the degree of expansion upon thermoforming.

### FIGURES

The following figures are supposed to further illustrate the present invention. The numbers and letters displayed in the microscopic images of multilayer sheets refer to the following:
1 to the first layer, 2 to the second layer, 3 to the third layer, 4 to the fourth layer, 5 of the fifth layer, 1a to the first sub-layer of the first layer, 1b to the second sub-layer of the first layer, CL to the coating layer, and LM to the laser-marked area.

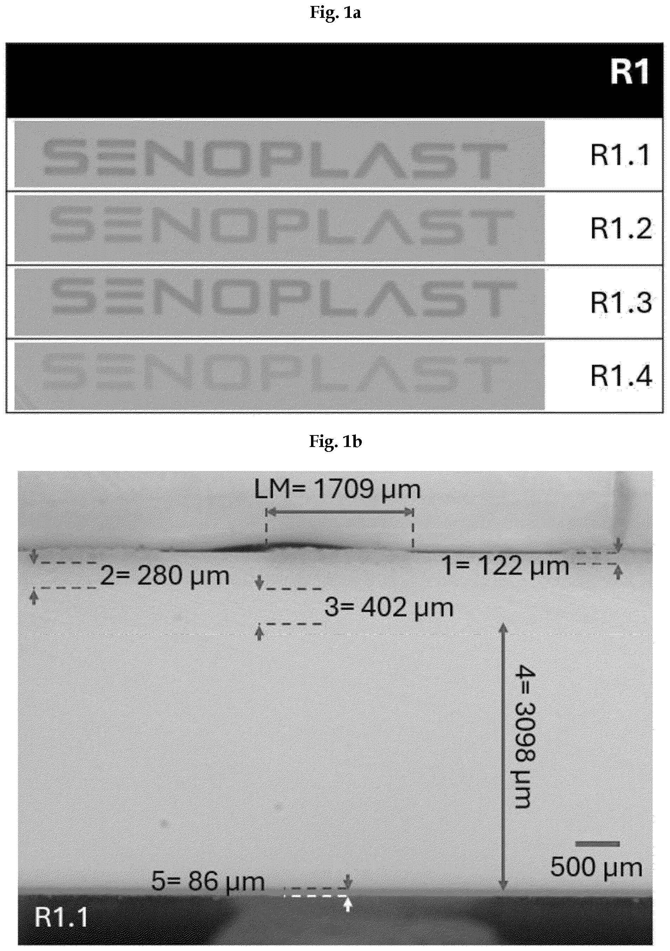

Fig. 1a shows a photographic view of the text in the multilayer reference sheet no. R1 generated by laser-marking with different laser operating parameters.

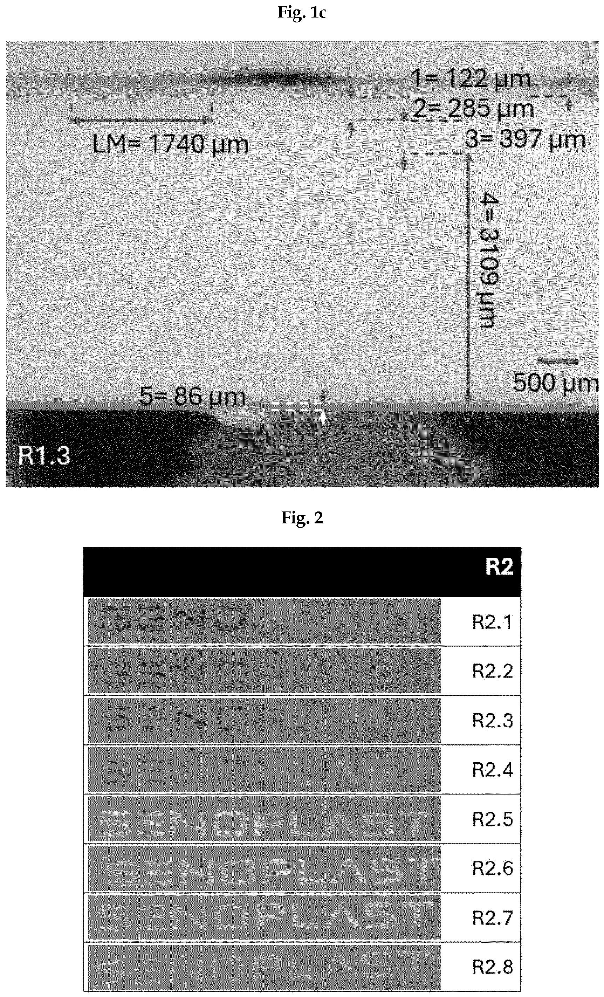

Fig. 1b and Fig. 1c show microscopic images of vertical cross-sections of reference samples no. R1.1 and R1.3, respectively, to visualize the position of the laser-marked area and the thickness of the layers.
Fig. 2 shows a photographic view of the text in the multilayer reference sheet no. R2 generated by laser-marking with different laser operating parameters.
Fig. 3a, Fig. 4a, Fig. 5a, Fig. 6a, Fig. 7a, Fig. 8a, Fig. 9a, Fig. 10a and Fig. 11a each show a photographic view of the text in the multilayer sheets number 1 to 9, respectively, generated by laser-marking with different laser operating parameters.

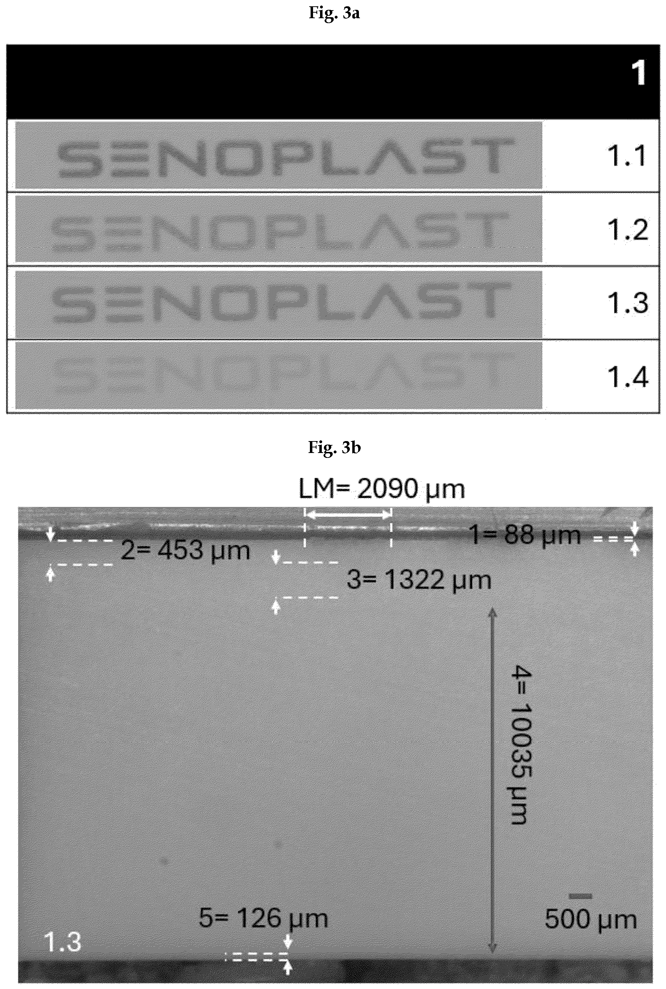

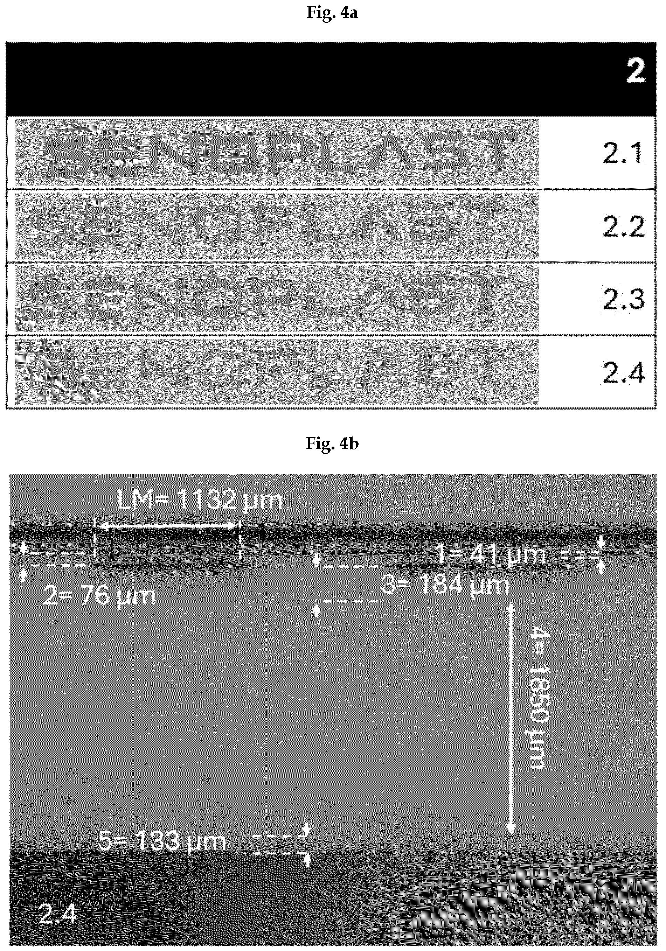

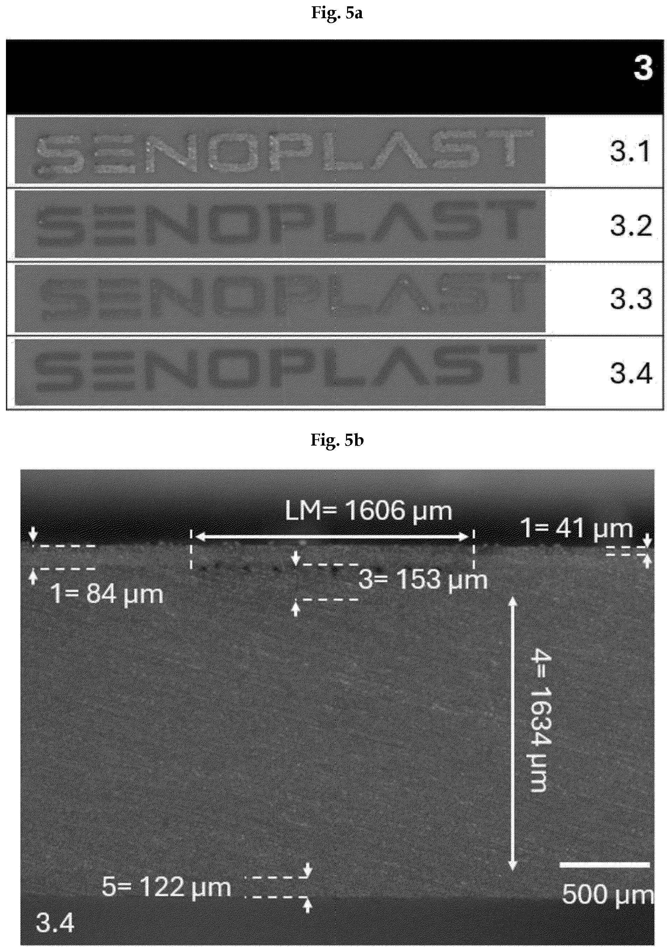

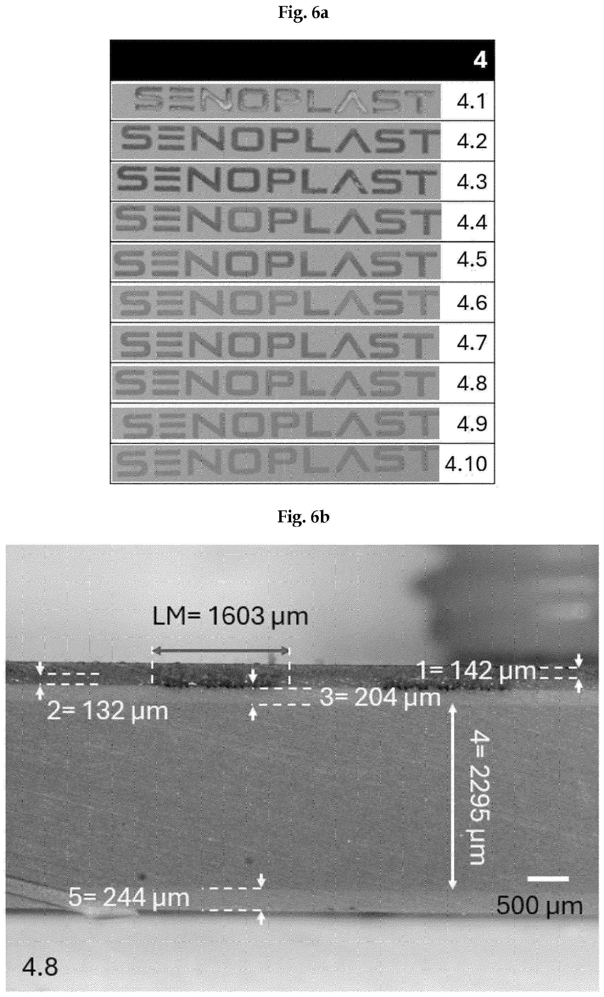

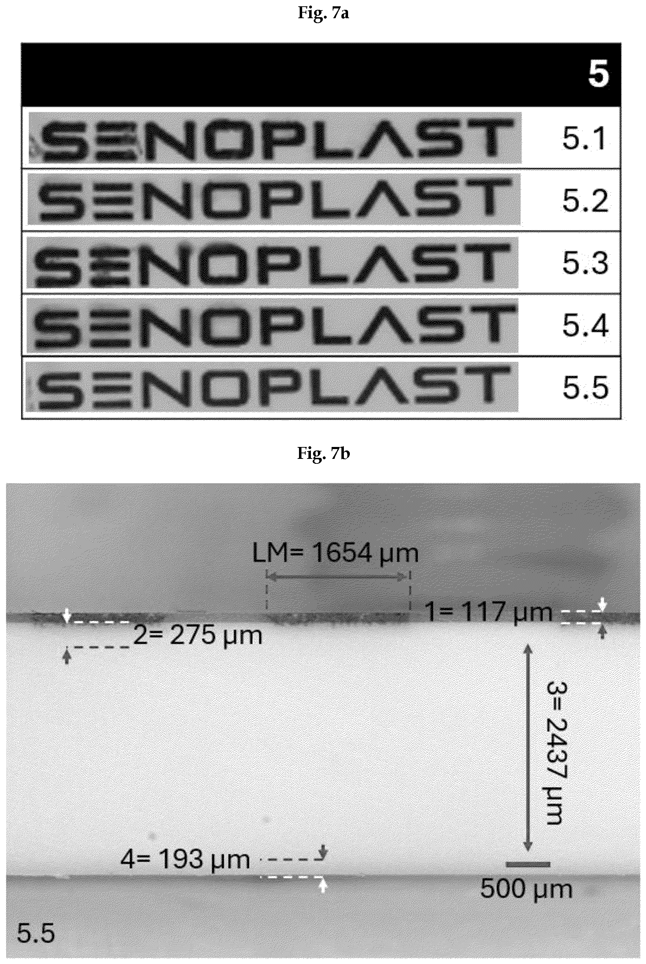

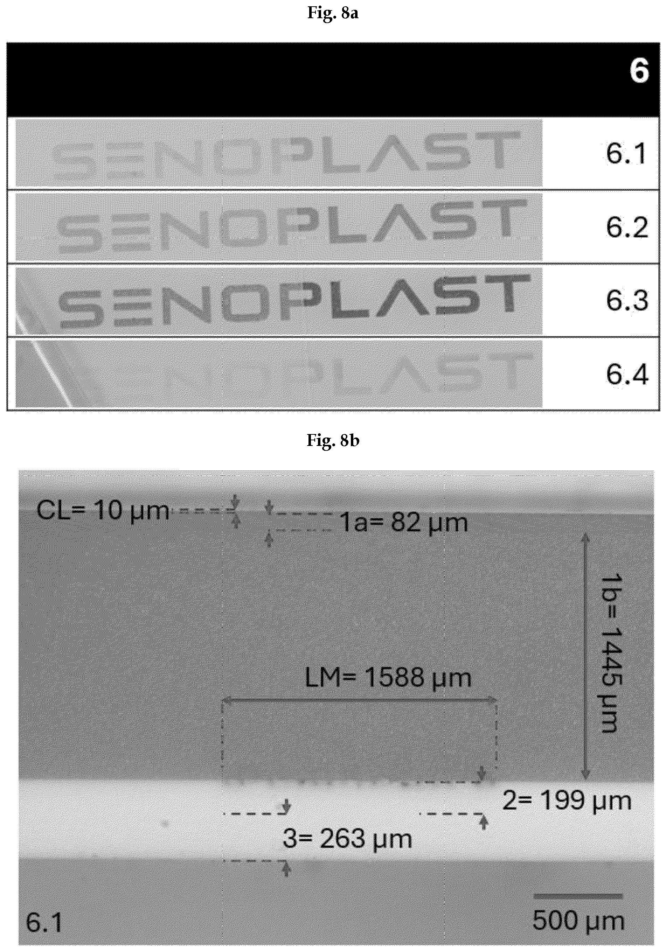

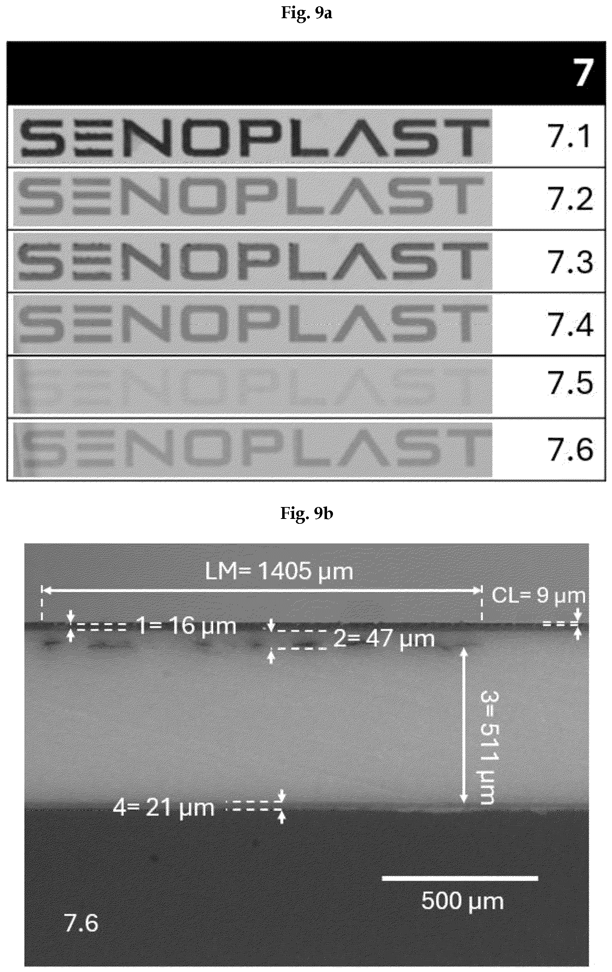

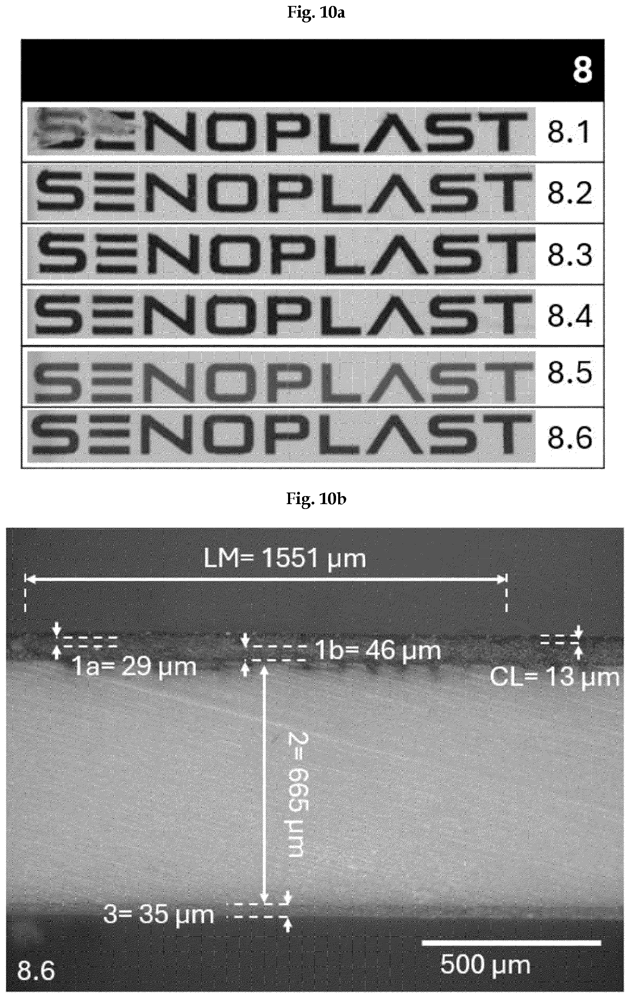

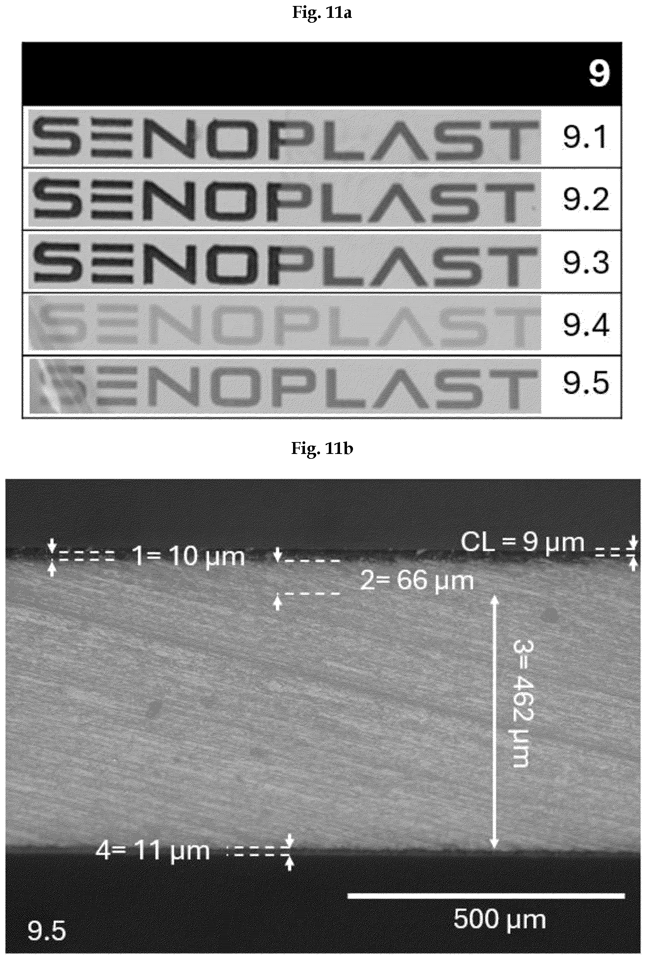

Fig. 3b, Fig. 4b, Fig. 5b, Fig. 6b, Fig. 7b, Fig. 8b, Fig. 9b, Fig. 10b and Fig. 11b each show a microscopic image of a vertical cross-section of a selected sample to visualize the position of the laser-marked area, and the thickness of the respective layers. The selected sample numbers are as follows: 1.3 (Fig. 3b), 2.4 (Fig. 4b), 3.4 (Fig. 5b), 4.8 (Fig. 6b), 5.5 (Fig. 7b), 6.1 (Fig. 8b), 7.6 (Fig. 9b), 8.6 (Fig. 10b) and 9.5 (Fig. 11b). It is noted that the laser-marked area LM is not visualized in sample no. 9.5 because due to the high magnification, it extends across the entire width of the image.

### EXAMPLES

The following examples serve to better illustrate the present invention but shall not be regarded as being limiting for the scope of the invention. The multilayer sheets with the compositions according to Table 1 were used, among them two reference sheets (R1 and R2) with a color masterbatch comprising a laser-sensitive coloring agent in the first layer (such that the laser-marking is generated in the first layer instead of the second layer as required by the present invention), and nine sheets with a color masterbatch comprising a laser-sensitive coloring agent in the second layer, and with the first layer being free of a coloring agent. Each of the analyzed multilayer sheets comprises a protection layer on top of the first layer (or on the coating layer, if present). The transparent coating layers comprised in the multilayer sheets no. 6 to 9 are acrylic resins. The UV absorbers comprised in the multilayer sheets are triazine-based. The composition of the ABS, PMMA and PS types comprised in the multilayer sheets can be seen from Tables 2a-2c, respectively. Information about the transparent protection layers can be obtained from Table 3, including the polymer type, the adhesive (if present) and the color of the protection layer. Furthermore, Table 4 provides some information about some of the color masterbatches comprised in the multilayer sheets, at least of those comprised in the second layer of the multilayer sheets no. 1 to 9, namely the titanium dioxide content and some information about further components comprised in said color masterbatches.

**Table 1: Composition of the tested multilayer sheets (amounts in wt% with respect to the total weight of polymer(s) comprised in the respective layer; color MB = color masterbatch)**

| **Sheet no.** | **R1** | | | | **R2** | | | |
|---|---|---|---|---|---|---|---|---|
| | **Polymer** | **Color MB (wt%)** | **UV absorber (wt%)** | **HALS (wt%)** | **Polymer** | **Color MB (wt%)** | **UV absorber (wt%)** | **HALS (wt%)** |
| **Protection layer** | I3 | | | | S9 | | | |
| **First layer** | GP-PMMA 1 | 1.0% A1 | 0 | 0 | HI-PMMA 1 | 1.7% B1 | 0 | 0 |
| **Second layer** | GP-PMMA 2 | 2.0% A1 | 0 | 0 | MI-ABS 3 | 0.5% B2 | 0 | 0 |
| **Third layer** | MI-ABS 1 | 3.3% A2 | 0 | 0 | HI-ABS 2 | 0.3% B2 | 0 | 0 |
| **Fourth layer** | HI-ABS 1 | 2.5% A3 | 0 | 0 | HI-ABS 3 | 0.5% B2 | 0 | 0 |
| **Fifth layer** | MI-ABS 2 | 0 | 0 | 0 | - | - | - | - |

| **Sheet no.** | **1** | | | | **2** | | | |
|---|---|---|---|---|---|---|---|---|
| | **Polymer** | **Color MB (wt%)** | **UV absorber (wt%)** | **HALS (wt%)** | **Polymer** | **Color MB (wt%)** | **UV absorber (wt%)** | **HALS (wt%)** |
| **Protection layer** | G3 transparent blue | | | | N12 | | | |
| **First layer** | HI-PMMA 2 | 0 | 0.3 | 0.3 | HI-PMMA 3 | 0 | 0 | 0 |
| **Second layer** | HI-PMMA 2 | 9.0% C1 | 0.1 | 0.8 | HI-PMMA 3 | 2.0% D1 | 0 | 0 |
| **Third layer** | MI-ABS 1 | 4.5% C2 | 0.2 | 0.2 | MI-ABS 3 | 3.0% D2 | 0 | 0 |
| **Fourth layer** | HI-ABS 4 | 1.0% C3 | 0 | 0 | HI-ABS 2 | 2.5% D3 | 0 | 0 |
| **Fifth layer** | HI-ABS 3 | 1.5% C2 | 0 | 0 | HI-ABS 3 | 2.5% D3 | 0 | 0 |

| **Sheet no.** | **3** | | | | **4** | | | |
|---|---|---|---|---|---|---|---|---|
| | **Polymer** | **Color MB (wt%)** | **UV absorber (wt%)** | **HALS (wt%)** | **Polymer** | **Color MB (wt%)** | **UV absorber (wt%)** | **HALS (wt%)** |
| **Protection layer** | N12 | | | | G3 | | | |
| **First layer** | GP-PMMA 3 | 0 | 0.3 | 0.3 | HI-PMMA 3 | 0 | 0.3 | 0.3 |
| **Second layer** | HI-PMMA 3 | 1.4% E1 | 0.1 | 0.8 | HI-PMMA 3 | 1.0% F1 | 0.4 | 0 |
| **Third layer** | HI-ABS 5 | 3.0% E2 | 0.2 | 0.2 | MI-ABS 3 | 1.5% F2 | 0.2 | 0.2 |
| **Fourth layer** | HI-ABS 2 | 2.0% E3 | 0 | 0 | HI-ABS 6 | 0.8% F3 | 0 | 0 |
| **Fifth layer** | HI-ABS 3 | 1.0% E3 | 0 | 0 | HI-ABS 3 | 1.0% F2 | 0 | 0 |

| **Sheet no.** | **5** | | | | **6** | | | |
|---|---|---|---|---|---|---|---|---|
| | **Polymer** | **Color MB (wt%)** | **UV absorber (wt%)** | **HALS (wt%)** | **Polymer** | **Color MB (wt%)** | **UV absorber (wt%)** | **HALS (wt%)** |
| **Protection layer** | G3 | | | | T3 | | | |
| **Coating layer** | - | - | - | - | coating layer 1 | 0 | 0 | 0 |
| **First layer** | GP-PS 1 | 0 | 0 | 0 | **First sub-layer** | | | |
| | | | | | HI-PMMA 4 | 0 | 0 | 0 |
| | | | | | **Second sub-layer** | | | |
| | | | | | GP-PMMA 4 | 0 | 0 | 0 |
| **Second layer** | HI-PS 1 | 3.0% G1 | 0 | 0 | GP-PMMA 4 | 16.0% H1 | 0 | 0 |
| **Third layer** | HI-PS 1 | 2.5% G2 | 0 | 0 | MI-ABS 1 | 12.0% H2 | 0 | 0 |
| **Fourth layer** | HI-PS 2 | 2.0% G2 | 0 | 0 | - | - | - | - |

| | **7** | | | | **8** | | | |
|---|---|---|---|---|---|---|---|---|
| | **Polymer** | **Color MB (wt%)** | **UV absorber (wt%)** | **HALS (wt%)** | **Polymer** | **Color MB (wt%)** | **UV absorber (wt%)** | **HALS (wt%)** |
| **Protection layer** | T3 | | | | T2 | | | |
| **Coating layer** | Coating layer 2 | 0 | 0 | 0 | Coating layer 2 | 0 | 0 | 0 |
| **First layer** | HI-PMMA 5 | 0 | 0 | 0 | **First sub-layer** | | | |
| | | | | | HI-PMMA 5 | 0 | 0 | 0 |
| | | | | | **Second sub-layer** | | | |
| | | | | | GP-PMMA 6 | 5.0% J1 | 0 | 0 |
| **Second layer** | GP-PMMA 5 | 15.0% I1 | 0 | 0 | MI-ABS 3 | 10.5% J2 | 0 | 0 |
| **Third layer** | MI-ABS 3 | 12.5% I2 | 0 | 0 | HI-ABS 7 | 0 | 0 | 0 |
| **Fourth layer** | HI-ABS 7 | 0 | 0 | 0 | - | - | - | - |

| | **9** | | | | | | | |
|---|---|---|---|---|---|---|---|---|
| | **Polymer** | **Color MB (wt%)** | **UV absorber (wt%)** | **HALS (wt%)** | | | | |
| **Protection layer** | T3 | | | | | | | |
| **Coating layer** | Coating layer 3 | 0 | 0 | 0 | | | | |
| **First layer** | PETG 1 | 0 | 0 | 0 | | | | |
| **Second layer** | A-PET 1 | 10.0% K1 | 0 | 0 | | | | |
| **Third layer** | A-PET 1 | 10.0% K1 | 0 | 0 | | | | |
| **Fourth layer** | PETG 1 | 0 | 0 | 0 | | | | |

**Table 2a: Composition of the ABS types used in the multilayer sheets of Table 1**

| **ABS type** | **Acrylonitrile (wt%)** | **Styrene (wt%)** | **Butadiene (wt%)** |
|---|---|---|---|
| HI-ABS1 | 21 | 61 | 18 |
| HI-ABS2 | 23 | 62 | 15 |
| HI-ABS3 | 24 | 60 | 16 |
| HI-ABS4 | 21 | 62 | 17 |
| HI-ABS5 | 22 | 62 | 16 |
| HI-ABS6 | 22 | 63 | 15 |
| HI-ABS7 | 21 | 64 | 15 |
| MI-ABS1 | 24 | 66 | 10 |
| MI-ABS2 | 24 | 67 | 9 |
| MI-ABS3 | 23 | 66 | 11 |

**Table 2b: Composition of the PMMA types used in the multilayer sheets of Table 1**

| **Polymer** | **Methyl acrylate (wt%)** | **Rubber (wt%)** |
|---|---|---|
| GP-PMMA 1 | 100 | - |
| GP-PMMA 2 | 100 | - |
| GP-PMMA 3 | 100 | - |
| GP-PMMA 4 | 100 | - |
| GP-PMMA 5 | 100 | - |
| GP-PMMA 6 | 100 | - |
| HI-PMMA 1 | 93 | 7% methyl methacrylate-butadiene-styrene |
| HI-PMMA 2 | 85 | 15% methyl methacrylate-butadiene-styrene |
| HI-PMMA 3 | 83 | 17% polybutadiene |
| HI-PMMA 4 | 90 | 10% styrene-butadiene |
| HI-PMMA 5 | 87 | 13% butyl acrylate |

**Table 2c: Composition of the PS types used in the multilayer sheets of Table 1**

| **Polymer** | **Styrene (wt%)** | **Polybutadiene (wt%)** |
|---|---|---|
| GP-PS 1 | 100 | 0 |
| HI-PS 1 | 95 | 5 |
| HI-PS 2 | 90 | 10 |

**Table 3: Information about the protection layers used in the multilayer sheets of Table 1**

| **Protection layer** | **Polymer type** | **Adhesive type** | **Color** |
|---|---|---|---|
| G3 | PE | - | transparent |
| G3 transparent blue | PE | - | transparent blue |
| T2 | PE | acrylate | transparent blue |
| T3 | PE | acrylate | transparent blue |
| N12 | PE | - | transparent |
| I3 | PE | - | transparent |
| S9 | PP | natural rubber | transparent |

**Table 4: Composition of the color masterbatches (color MB) used in the multilayer sheets of Table 1**

| **Color MB** | **Titanium dioxide (wt%)¹** | **Other components** |
|---|---|---|
| A1 | 58.5² | Chromium trioxide; paraffin oil |
| B1 | 11.5 | Pigment black; α-copper phthalocyanine; perylene red; aluminum effect pigments; paraffin oil |
| C1 | 4.5 | Red iron oxide; monoazo pigment; calcium carbonate; quinone phthalone yellow; barium sulphate; paraffin oil |
| C2 | 10.1 | Red iron oxide; monoazo pigment; calcium carbonate; quinone phthalone yellow; barium sulphate; pigment black; paraffin oil |
| D1 | 53.8 | Chlorinated copper phthalocyanine; barium sulphate; pigment black; paraffin oil |
| D2 | 54.2 | Chlorinated copper phthalocyanine; barium sulphate; α-copper phthalocyanine; paraffin oil |
| E1 | 13.6 | Perylene red; paraffin oil |
| E2 | 0.1 | Perylene red; paraffin oil |
| F1 | 6.1 | Aluminum effect pigment; monoazo pigment; calcium carbonate; perylene red; paraffin oil |
| F2 | 54.2² | Pigment black; red iron oxide; perylene red; paraffin oil |
| G1 | 28.7 | Chlorinated copper phthalocyanine; barium sulphate; pigment black; perylene red; paraffin oil |
| G2 | 59.8 | Chlorinated copper phthalocyanine; barium sulphate; pigment black; prylene red ; paraffin oil |
| H1 | 29.4² | Chlorinated copper phthalocyanine; barium sulphate; pigment black; perylene red; paraffin oil |
| H2 | 59.7² | Chlorinated copper phthalocyanine; barium sulphate; pigment black; paraffin oil |
| I1 | 20.0 | Red iron oxide; chlorinated copper phthalocyanine; barium sulphate; perylene red; pigment black; paraffin oil |
| I2 | 47.6 | Chlorinated copper phthalocyanine; barium sulphate; pigment black; prylene red; paraffin oil |
| J1 | 0 | White glitter |
| J2 | 48.0 | Red iron oxide; chlorinated copper phthalocyanine; barium sulphate; perylene red; pigment black; paraffin oil |
| K1 | 59.4 | Pigment carbon black; perylene red; paraffin oil |

| | | |
|---|---|---|
| ¹ with respect to the total weight of the respective color masterbatch ² a part of the titanium dioxide is antimony-doped TiO₂, namely antimony chromium TiO₂ | | |

The multilayer sheets of Table 1 were subjected to laser-marking with a fiber laser (SpeedMarker 300, SCANcube 10, Trotec, Germany) with a maximum power of 30 W and a wavelength of 1064 nm. The multilayer sheets were laser-marked using a pulse frequency of 20 kHz and a distance of sheet surface to laser of 160 mm. In each multilayer sheet, the letters "SENOPLAST" were laser-marked several times with varying laser power and laser speed, as listed in Table 5. In each case, laser-marking occurred with one laser pass. Table 5 additionally shows the linear energy density of the laser.

Prior to the laser-marking experiments, half of the protection layer was removed to allow for the laser-marking to be performed at the same multilayer sheet in presence and absence of the protection layer, such to assess the influence of the protection layer on the laser-marking. Namely, the letters "SENO" and half of the letter "P" were generated upon laser-marking in presence of the protection layer whilst the remaining letters were generated upon laser-marking in absence of the protection layer.

**Table 5: Operating parameters used during laser-marking of the multilayer sheets of Table 1**

| **Sheet no. R1** | **R1.1** | **R1.2** | **R1.3** | **R1.4** | | | | |
|---|---|---|---|---|---|---|---|---|
| Laser power (W) | 27 | 7.5 | 15 | 7.5 | | | | |
| Laser speed (mm/s) | 200 | 100 | 200 | 200 | | | | |
| Linear energy density (J/mm) | 0.135 | 0.075 | 0.075 | 0.038 | | | | |

| **Sheet no. R2** | **R2.1** | **R2.2** | **R2.3** | **R2.4** | **R2.5** | **R2.6** | **R2.7** | **R2.8** |
|---|---|---|---|---|---|---|---|---|
| Laser power (W) | 27 | 7.5 | 15 | 7.5 | 3 | 3 | 3 | 3 |
| Laser speed (mm/s) | 200 | 100 | 200 | 200 | 400 | 1000 | 1500 | 2000 |
| Linear energy density (J/mm) | 0.135 | 0.075 | 0.075 | 0.038 | 0.008 | 0.003 | 0.002 | 0.002 |

| **Sheet no. 1** | **1.1** | **1.2** | **1.3** | **1.4** | | | | |
|---|---|---|---|---|---|---|---|---|
| Laser power (W) | 27 | 7.5 | 15 | 7.5 | | | | |
| Laser speed (mm/s) | 200 | 100 | 200 | 200 | | | | |
| Linear energy density (J/mm) | 0.135 | 0.075 | 0.075 | 0.038 | | | | |

| **Sheet no. 2** | **2.1** | **2.2** | **2.3** | **2.4** | | | | |
|---|---|---|---|---|---|---|---|---|
| Laser power (W) | 27 | 7.5 | 15 | 7.5 | | | | |
| Laser speed (mm/s) | 200 | 100 | 200 | 200 | | | | |
| Linear energy density (J/mm) | 0.135 | 0.075 | 0.075 | 0.038 | | | | |

| **Sheet no. 3** | **3.1** | **3.2** | **3.3** | **3.4** | | | | |
|---|---|---|---|---|---|---|---|---|
| Laser power (W) | 27 | 7.5 | 15 | 7.5 | | | | |
| Laser speed (mm/s) | 200 | 100 | 200 | 200 | | | | |
| Linear energy density (J/mm) | 0.135 | 0.075 | 0.075 | 0.038 | | | | |

| **Sheet no. 4** | **4.1** | **4.2** | **4.3** | **4.4** | **4.5** | | | |
|---|---|---|---|---|---|---|---|---|
| Laser power (W) | 27 | 7.5 | 15 | 7.5 | 7.5 | | | |
| Laser speed (mm/s) | 200 | 100 | 200 | 200 | 300 | | | |
| Linear energy density (J/mm) | 0.135 | 0.075 | 0.075 | 0.038 | 0.025 | | | |

| **Sheet no. 4** | **4.6** | **4.7** | **4.8** | **4.9** | **4.10** | | | |
|---|---|---|---|---|---|---|---|---|
| Laser power (W) | 7.5 | 6 | 3 | 3 | 3 | | | |
| Laser speed (mm/s) | 500 | 200 | 200 | 300 | 400 | | | |
| Linear energy density (J/mm) | 0.015 | 0.03 | 0.015 | 0.01 | 0.008 | | | |

| **Sheet no. 5** | **5.1** | **5.2** | **5.3** | **5.4** | **5.5** | | | |
|---|---|---|---|---|---|---|---|---|
| Laser power (W) | 27 | 7.5 | 15 | 7.5 | 3 | | | |
| Laser speed (mm/s) | 200 | 100 | 200 | 200 | 400 | | | |
| Linear energy density (J/mm) | 0.135 | 0.075 | 0.075 | 0.038 | 0.008 | | | |

| **Sheet no. 6** | **6.1** | **6.2** | **6.3** | **6.4** | | | | |
|---|---|---|---|---|---|---|---|---|
| Laser power (W) | 7.5 | 15 | 27 | 7.5 | | | | |
| Laser speed (mm/s) | 100 | 200 | 200 | 200 | | | | |
| Linear energy density (J/mm) | 0.075 | 0.075 | 0.135 | 0.038 | | | | |

| **Sheet no. 7** | **7.1** | **7.2** | **7.3** | **7.4** | **7.5** | **7.6** | | |
|---|---|---|---|---|---|---|---|---|
| Laser power (W) | 27 | 7.5 | 15 | 7.5 | 3 | 4.5 | | |
| Laser speed (mm/s) | 200 | 100 | 200 | 200 | 400 | 400 | | |
| Linear energy density (J/mm) | 0.135 | 0.075 | 0.075 | 0.038 | 0.008 | 0.011 | | |

| **Sheet no. 8** | **8.1** | **8.2** | **8.3** | **8.4** | **8.5** | **8.6** | | |
|---|---|---|---|---|---|---|---|---|
| Laser power (W) | 27 | 7.5 | 15 | 7.5 | 3 | 4.5 | | |
| Laser speed (mm/s) | 200 | 100 | 200 | 200 | 400 | 400 | | |
| Linear energy density (J/mm) | 0.135 | 0.075 | 0.075 | 0.038 | 0.008 | 0.011 | | |

| **Sheet no. 9** | **9.1** | **9.2** | **9.3** | **9.4** | **9.5** | | | |
|---|---|---|---|---|---|---|---|---|
| Laser power (W) | 7.5 | 15 | 7.5 | 3 | 4.5 | | | |
| Laser speed (mm/s) | 100 | 200 | 200 | 400 | 400 | | | |
| Linear energy density (J/mm) | 0.075 | 0.075 | 0.038 | 0.008 | 0.011 | | | |

The contrast and smoothness of the laser-marked areas were assessed by grading them (see Table 6a). A contrast grade from 1 to 5 was assigned, with 1 denoting a high contrast (i.e. an intensive, good laser-marking) and 5 denoting a low contrast (i.e. a light laser-marking). Furthermore, a smoothness grade from 1 to 5 was assigned, with 1 denoting a laser-marking that is not felt or otherwise noticed when touching the surface of the respective sample, and 5 denoting a laser-marking showing a strong foaming and/or material removal. The gradings refer to the laser-marked multilayer sheets after removal of the protection layer. Furthermore, some observations were denoted for each laser-marked multilayer sheet, particularly regarding differences between the areas laser-marked in presence and absence of the protection layer, as seen from Table 6b.

Microscopic images of vertical cross-sections of the multilayer sheets were additionally taken by using a Keyence VHX-6000XY microscope (Keyence Corporation) equipped with Keyence VH-Z20R (magnification: 50x to 200x) and Keyence VH-Z100R (magnification: 100x to 1000x) and an analysis software VHX-6000 Ver 3.2.0.121 (System Ver 3.03) by using a magnification in the range of from 50x to 300x. The protection layer was removed from the multilayer sheets and samples with a size of from 15 mm x 90 mm to 25 mm x 140 mm were analyzed via microscope. Table 6b provides a reference to the relevant figures for each multilayer sheet.

**Table 6a: Assessment of contrast and smoothness of laser-marked multilayer sheets (1 = good result; 5 = bad result)**

| | **Experiment no.** | | | | | | | | | |
|---|---|---|---|---|---|---|---|---|---|---|
| **Sheet no. R1** | **R1.1** | **R1.2** | **R1.3** | **R1.4** | | | | | | |
| Contrast | 3 | 3 | 3 | 4 | | | | | | |
| Smoothness | 3 | 3 | 3 | 2 | | | | | | |

| **Sheet no. R2** | **R2.1** | **R2.2** | **R2.3** | **R2.4** | **R2.5** | **R2.6** | **R2.7** | **R2.8** | | |
|---|---|---|---|---|---|---|---|---|---|---|
| Contrast | 4 | 4 | 4 | 5 | 3 | 3 | 3 | 3 | | |
| Smoothness | 5 | 4 | 4 | 3 | 3 | 3 | 3 | 3 | | |

| **Sheet no. 1** | **1.1** | **1.2** | **1.3** | **1.4** | | | | | | |
|---|---|---|---|---|---|---|---|---|---|---|
| Contrast | 1 | 3 | 2 | 4 | | | | | | |
| Smoothness | 3 | 1 | 1 | 1 | | | | | | |

| **Sheet no. 2** | **2.1** | **2.2** | **2.3** | **2.4** | | | | | | |
|---|---|---|---|---|---|---|---|---|---|---|
| Contrast | 2 | 2 | 2 | 2 | | | | | | |
| Smoothness | 4 | 2 | 2 | 1 | | | | | | |

| **Sheet no. 3** | **3.1** | **3.2** | **3.3** | **3.4** | | | | | | |
|---|---|---|---|---|---|---|---|---|---|---|
| Contrast | 1 | 2 | 3 | 2 | | | | | | |
| Smoothness | 3 | 1 | 2 | 1 | | | | | | |

| **Sheet no. 4** | **4.1** | **4.2** | **4.3** | **4.4** | **4.5** | **4.6** | **4.7** | **4.8** | **4.9** | **4.10** |
|---|---|---|---|---|---|---|---|---|---|---|
| Contrast | 3 | 1 | 1 | 2 | 2 | 2 | 2 | 2 | 2 | 2 |
| Smoothness | 5 | 2 | 2 | 1 | 1 | 1 | 1 | 1 | 1 | 1 |

| **Sheet no. 5** | **5.1** | **5.2** | **5.3** | **5.4** | **5.5** | | | | | |
|---|---|---|---|---|---|---|---|---|---|---|
| Contrast | 1 | 1 | 1 | 1 | 1 | | | | | |
| Smoothness | 3 | 1 | 1 | 1 | 1 | | | | | |

| **Sheet no. 6** | **6.1** | **6.2** | **6.3** | **6.4** | | | | | | |
|---|---|---|---|---|---|---|---|---|---|---|
| Contrast | 3 | 3 | 1 | 4 | | | | | | |
| Smoothness | 1 | 1 | 1 | 1 | | | | | | |

| **Sheet no. 7** | **7.1** | **7.2** | **7.3** | **7.4** | **7.5** | **7.6** | | | | |
|---|---|---|---|---|---|---|---|---|---|---|
| Contrast | 1 | 2 | 2 | 2 | 4 | 2 | | | | |
| Smoothness | 3 | 2 | 3 | 1 | 1 | 1 | | | | |

| **Sheet no. 8** | **8.1** | **8.2** | **8.3** | **8.4** | **8.5** | **8.6** | | | | |
|---|---|---|---|---|---|---|---|---|---|---|
| Contrast | 1 | 1 | 1 | 1 | 2 | 1 | | | | |
| Smoothness | 3 | 3 | 2 | 2 | 1 | 1 | | | | |

| **Sheet no. 9** | **9.1** | **9.2** | **9.3** | **9.4** | **9.5** | | | | | |
|---|---|---|---|---|---|---|---|---|---|---|
| Contrast | 1 | 1 | 1 | 3 | 2 | | | | | |
| Smoothness | 3 | 3 | 2 | 1 | 1 | | | | | |

**Table 6b: Observations of laser-marked multilayer sheets with regard to contrast and smoothness**

| **Sheet no.** | **Observations** | **Relevant figures** |
|---|---|---|
| R1 | The areas laser-marked in presence and absence of the protection layer do not have a difference in contrast and smoothness. All laser-marked areas have a low contrast. | Fig. 1a-c |
| R2 | The areas laser-marked in presence and absence of the protection layer have a difference in contrast and/or smoothness. In some of the samples, particularly in R2.4, the color of the areas laser-marked in presence of the protection layer is not uniform due to material remaining onto the protection layer upon its removal. | Fig. 2 |
| 1 | The areas laser-marked in presence and absence of the protection layer do not have a difference in contrast and smoothness. Sample no. 1.3 shows the best results in terms of both contrast and smoothness of the laser-marked area. | Fig. 3a-b |
| 2 | A difference in contrast and/or smoothness is observed between areas laser-marked in presence and absence of the protection layer, except for sample no. 2.4 which shows the best result. Regarding samples no. 2.1 to 2.3, the areas laser-marked in absence of the protection layer perform better, whilst the areas laser-marked in presence of the protection layer are a little damaged and exhibit some small black dots, presumably due to carbonization. | Fig. 4a-b |
| 3 | The areas laser-marked in presence and absence of the protection layer do not have a difference in contrast and smoothness, except for sample no. 3.1. The areas laser-marked in absence of the protection layer show a better result in terms of smoothness and/or contrast. | Fig. 5a-b |
| 4 | The areas laser-marked in presence and absence of the protection layer do not have a difference in contrast and smoothness. Sample no. 4.1 shows some foaming, resulting in a high roughness. Sample no. 4.4 to 4.10 show a particularly good performance, with a good contrast and a good smoothness. | Fig. 6a-b |
| 5 | A difference in contrast and/or smoothness is observed between areas laser-marked in presence and absence of the protection layer, except for sample no. 5.5 which shows the best result. The areas laser-marked in absence of the protection layer perform better. | Fig. 7a-b |
| 6 | All of the samples have an excellent smoothness. The area laser-marked in presence of the protection layer has a lower contrast, i.e. a lighter marking. | Fig. 8a-b |
| | Sample no. 6.3 shows the best result whilst the laser-marking of sample no. 6.4 has a low contrast, especially when marked in presence of the protection layer. | |
| 7 | The areas laser-marked in presence and absence of the protection layer do not have a difference in contrast and smoothness, except for sample no. 7.1. | Fig. 9a-b |
| | With sample no. 7.4, the best results both in terms of contrast and smoothness are obtained. | |
| 8 | A difference in contrast and/or smoothness is observed between areas laser-marked in presence and absence of the protection layer, except for sample no. 8.5 and 8.6. The areas laser-marked in absence of the protection layer show a better result in terms of smoothness and/or contrast. | Fig. 10a-b |
| 9 | A difference in contrast and/or smoothness is observed between areas laser-marked in presence and absence of the protection layer, except for sample no. 9.4 and 9.5. The areas laser-marked in absence of the protection layer show a better result in terms of smoothness and/or contrast. Samples no. 9.1 to 9.3 show the best contrast whilst samples no. 9.4 and 9.5 have the best performance in terms of smoothness. | Fig. 11a-b |

It is noted that when a component of the multilayer sheet is referred to herein with an indefinite article, this is not understood to be equal to "one" but rather means that a combination of two or more components of the same type is also comprised by the meaning, also if not explicitly noted. For example, if the first amorphous thermoplastic is referred to as being an HI-PMMA, this intends to mean that said first amorphous thermoplastic is either one single HI-PMMA type or a blend of two or more different HI-PMMA types.

As used herein, the term "about" means within a statistically meaningful range of a value, such as an amount, wavelength, thickness or frequency. That is, the term "about" is used herein to extend the boundaries of the stated value above and below by a meaningful variance. Such variance can be within an order of magnitude, typically within 1%, more typically within 5%, above or below the stated value. Sometimes, the variance can be within the experimental error typical of standard methods used for the measurement and/or determination of a given value. The allowable variation encompassed by the term "about" will be readily appreciated by those skilled in the art.

The foregoing examples and described embodiments of this disclosure have been set forth merely to illustrate the invention and are not intended to be limiting. Since modifications of the disclosed embodiments incorporating the substance of the invention may occur to those skilled in the art, the invention should be construed to include everything within the scope of the appended claims.

## Claims

1. Multilayer sheet for laser-marking, comprising a first layer and a second layer,
wherein the first layer is transparent and comprises a first amorphous thermoplastic,
wherein the second layer is laser-markable and adjacent to the first layer, and wherein the second layer comprises a second amorphous thermoplastic and a laser-sensitive coloring agent, and
wherein the first amorphous thermoplastic and/or the second amorphous thermoplastic comprises a poly(methyl methacrylate) (PMMA), an acrylonitrile butadiene styrene (ABS), a polystyrene (PS), a styrene acrylonitrile (SAN), an acrylonitrile styrene acrylate (ASA), or a combination thereof.

2. Multilayer sheet according to the preceding claim, wherein the first amorphous thermoplastic and/or the second amorphous thermoplastic comprises a PMMA.

3. Multilayer sheet according to any of the preceding claims, wherein the PMMA comprises an impact-modified PMMA (HI-PMMA).

4. Multilayer sheet according to any of the preceding claims, wherein the first amorphous thermoplastic is a PMMA, and the second amorphous thermoplastic is selected from the group consisting of a PMMA, an ABS, a PS, an ASA, a SAN, a polycarbonate (PC), an amorphous polyethylene terephthalate (A-PET), a polyethylene terephthalate glycol (PETG), or a combination thereof.

5. Multilayer sheet according to any of the preceding claims, wherein the second amorphous thermoplastic comprises an ABS.

6. Multilayer sheet according to claim 5, wherein the second amorphous thermoplastic is a combination of an ABS and a PC.

7. Multilayer sheet according to any of the preceding claims, wherein the laser-sensitive coloring agent comprises titanium dioxide (TiO₂), preferably wherein a part of the TiO₂ is doped with antimony.

8. Multilayer sheet according to any of the preceding claims, wherein the multilayer sheet further comprises a removable, transparent, thermoplastic protection layer, wherein the first layer is arranged between the protection layer and the second layer.

9. Multilayer sheet according to any of the preceding claims, wherein the multilayer sheet further comprises a transparent duromer coating layer adjacent to the first layer, wherein the first layer is arranged between the coating layer and the second layer, preferably wherein the coating layer comprises an acrylic resin.

10. Multilayer sheet according to any of the preceding claims, wherein the multilayer sheet is thermoformable.

11. Method for laser-marking a multilayer sheet according to any of the preceding claims, comprising the following steps:
a) providing the multilayer sheet, and
b) laser-marking a predetermined area of the second layer by directing a laser light onto the second layer through the first layer.

12. Method according to claim 11, wherein the method comprises a further step c) of thermoforming the multilayer sheet, wherein step c) is performed after step b) or between steps a) and b).

13. Method according to claim 12, wherein, when the multilayer sheet comprises a removable, transparent protection layer according to claim 8, the protection layer is removed after step b); or method according to claim 12, wherein, when the multilayer sheet comprises a protection layer according to claim 8, the protection layer is removed after the later of steps b) and c).

14. Laser-marked multilayer sheet obtainable with the method according to claim 11 or 13.

15. Laser-marked thermoformed object obtainable with the method according to claim 12 or 13.
